# EUROPEAN PATENT APPLICATION

(11) **EP 4 369 808 A1**
(43) Date of publication of application: **15.05.2024**
(21) Application number: 22845271.0
(22) Date of filing: 18.07.2022
(51) Int. Cl.: H04W 64/00

(54) **POSITIONING METHOD AND APPARATUS**

(30) Priority: 19.07.2021 CN 202110814960; 31.08.2021 CN 202111015466
(71) Applicant: Huawei Technologies Co., Ltd., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Körber, Martin Hans
(86) International application number: PCT/CN2022/106264
(87) International publication number: WO 2023/001106

(57) **Abstract**

This application provides a positioning method and apparatus. The method includes: A first device separately sends positioning request information to a second device and a third device, where the positioning request information is used to request the second device and the third device to initiate relative positioning; and the first device receives first measurement information from the second device and/or second measurement information from the third device, where the first measurement information includes a first measurement result and error distribution of the first measurement result, the second measurement information includes a second measurement result and error distribution of the second measurement result, and the first measurement information and/or the second measurement information are/is used to determine a result of a relative location between the second device and the third device. According to the method, during relative positioning, the first measurement information reported by the second device and/or the second measurement information reported by the third device each include/includes the error distribution, to obtain a more accurate positioning result.

## Description

This application claims priority to Chinese Patent Application No. 202110814960.1, filed with the China National Intellectual Property Administration on July 19, 2021 and entitled "COOPERATIVE POSITIONING METHOD AND APPARATUS", which is incorporated herein by reference in its entirety.

This application claims priority to Chinese Patent Application No. 202111015466.5, filed with the China National Intellectual Property Administration on August 31, 2021 and entitled "POSITIONING METHOD AND APPARATUS", which is incorporated herein by reference in its entirety.

### TECHNICAL FIELD

This application relates to the field of communication technologies, and more specifically, to a positioning method and apparatus.

### BACKGROUND

Positioning of a terminal device means that a mobile communication network determines geographical location information of the terminal device by measuring a radio signal. A user can obtain a positioning information-based geographical information service anytime and anywhere through a positioning service, to meet location determining requirements for "people, time, and places" in communication.

A principle of an existing positioning technology mainly includes a neighboring relationship-based positioning manner, a radio frequency fingerprint-based positioning manner, a spatial geometry relationship-based positioning manner, and the like. The spatial geometry relationship-based positioning manner is the most popular positioning method in a current 5th generation (5th generation, 5G) system. On a sidelink (sidelink, SL), when relative positioning is performed based on a spatial geometry relationship, positioning mainly depends on a first path of electromagnetic wave propagation between two devices to determine a distance and an angle between the two devices. Therefore, positioning accuracy is limited by a channel environment. For example, when the first path between the two terminal devices is blocked by an object, a propagation speed of an electromagnetic wave in the obstacle is reduced. Consequently, propagation time of a signal on the first path between the two terminal devices is long, and a distance measurement value deviates.

During relative positioning, how to obtain a more accurate positioning result becomes a problem to be resolved urgently.

### SUMMARY

This application provides a positioning method, to obtain a more accurate positioning result.

According to a first aspect, a positioning method is provided. The method may be performed by a first device, or may be performed by a chip, a chip system, or a circuit in the first device. This is not limited in this application. For ease of description, an example in which the method is performed by the first device is used below for description.

The method includes: separately sending positioning request information to a second device and a third device, where the positioning request information is used to request the second device and the third device to initiate relative positioning; and receiving first measurement information from the second device and/or second measurement information from the third device, where the first measurement information is used to determine a relative location between the second device and the third device, the first measurement information includes a first measurement result and error distribution of the first measurement result, the second measurement information is used to determine the relative location between the second device and the third device, the second measurement information includes a second measurement result and error distribution of the second measurement result, and the first measurement information and/or the second measurement information are/is used to determine a result of the relative location between the second device and the third device.

Based on the foregoing technical solution, the first device may receive the first measurement information from the second device and/or the second measurement information from the third device, where the first measurement information includes the first measurement result and the error distribution of the first measurement result, and the second measurement information includes the second measurement result and the error distribution of the second measurement result, so that the first device can determine the result of the relative location between the second device and the third device based on the first measurement information and/or the second measurement information. That is, during relative positioning, the first measurement information reported by the second device and/or the second measurement information reported by the third device each include/includes the error distribution, to obtain a more accurate positioning result.

With reference to the first aspect, in some implementations of the first aspect, the method further includes: sending resource configuration information of a first reference signal and/or resource configuration information of a second reference signal to the second device and the third device, where the resource configuration information of the first reference signal indicates a resource used by the second device to send the first reference signal to the third device, and the resource configuration information of the second reference signal indicates a resource used by the third device to send the second reference signal to the second device.

With reference to the first aspect, in some implementations of the first aspect, the receiving first measurement information from the second device and/or second measurement information from the third device includes: receiving the first measurement information from the second device or the second measurement information from the third device, where the first measurement result includes first time difference information, the second measurement result includes second time difference information, the first time difference information indicates a time difference between a moment at which the third device sends the second reference signal and a moment at which the second device receives the second reference signal, and the second time difference information indicates a time difference between a moment at which the second device sends the first reference signal and a moment at which the third device receives the first reference signal.

With reference to the first aspect, in some implementations of the first aspect, the receiving first measurement information from the second device and/or second measurement information from the third device includes: receiving the first measurement information from the second device and the second measurement information from the third device, where the first measurement result includes third time difference information, the second measurement result includes fourth time difference information, the third time difference information indicates a time difference between a moment at which the second device sends the first reference signal and a moment at which the second device receives the second reference signal, and the fourth time difference information indicates a time difference between a moment at which the third device receives the first reference signal and a moment at which the third device sends the second reference signal.

With reference to the first aspect, in some implementations of the first aspect, the first measurement result includes first angle measurement information and/or the second measurement result includes second angle measurement information, the first angle measurement information is determined based on the second reference signal, the first angle measurement information indicates an angle of the third device relative to the second device, the second angle measurement information is determined based on the first reference signal, and the second angle measurement information indicates an angle of the second device relative to the third device.

With reference to the first aspect, in some implementations of the first aspect, the method further includes: receiving third measurement information from the third device and/or fourth measurement information from a fourth device, where the third measurement information is used to determine a relative location between the third device and the fourth device, the third measurement information includes a third measurement result and error distribution of the third measurement result, the fourth measurement information is used to determine the relative location between the third device and the fourth device, and the fourth measurement information includes a fourth measurement result and error distribution of the fourth measurement result.

With reference to the first aspect, in some implementations of the first aspect, the method further includes: sending resource configuration information of a seventh reference signal and/or resource configuration information of an eighth reference signal to the third device and the fourth device, where the resource configuration information of the seventh reference signal indicates a resource used by the third device to send the seventh reference signal to the fourth device, and the resource configuration information of the eighth reference signal indicates a resource used by the fourth device to send the eighth reference signal to the third device.

With reference to the first aspect, in some implementations of the first aspect, the receiving third measurement information from the third device and/or fourth measurement information from a fourth device includes: receiving the third measurement information from the third device or the fourth measurement information from the fourth device, where the third measurement result includes fifth time difference information, the fourth measurement result includes sixth time difference information, the fifth time difference information indicates a time difference between a moment at which the fourth device sends the eighth reference signal and a moment at which the third device receives the eighth reference signal, and the sixth time difference information indicates a time difference between a moment at which the third device sends the seventh reference signal and a moment at which the fourth device receives the seventh reference signal.

With reference to the first aspect, in some implementations of the first aspect, the receiving third measurement information from the third device and/or fourth measurement information from a fourth device includes: receiving the third measurement information from the third device and the fourth measurement information from the fourth device, where the third measurement result includes seventh time difference information, the fourth measurement result includes eighth time difference information, the seventh time difference information indicates a time difference between a moment at which the third device sends the seventh reference signal and a moment at which the third device receives the eighth reference signal, and the eighth time difference information indicates a time difference between a moment at which the fourth device receives the seventh reference signal and a moment at which the fourth device sends the eighth reference signal.

With reference to the first aspect, in some implementations of the first aspect, the third measurement result includes third angle measurement information and/or the fourth measurement result includes fourth angle measurement information, the third angle measurement information is determined based on the eighth reference signal, the third angle measurement information indicates an angle of the fourth device relative to the third device, the fourth angle measurement information is determined based on the seventh reference signal, and the fourth angle measurement information indicates an angle of the third device relative to the fourth device.

With reference to the first aspect, in some implementations of the first aspect, the method further includes: receiving fifth measurement information from the second device and/or sixth measurement information from the fourth device, where the fifth measurement information is used to determine a relative location between the second device and the fourth device, the fifth measurement information includes a fifth measurement result and error distribution of the fifth measurement result, the sixth measurement information is used to determine the relative location between the second device and the fourth device, and the sixth measurement information includes a sixth measurement result and error distribution of the sixth measurement result.

With reference to the first aspect, in some implementations of the first aspect, the method further includes: sending resource configuration information of a ninth reference signal and/or resource configuration information of a tenth reference signal to the second device and the fourth device, where the resource configuration information of the ninth reference signal indicates a resource used by the second device to send the ninth reference signal to the fourth device, and the resource configuration information of the tenth reference signal indicates a resource used by the fourth device to send the tenth reference signal to the second device.

With reference to the first aspect, in some implementations of the first aspect, the receiving fifth measurement information from the second device and/or sixth measurement information from the fourth device includes: receiving the fifth measurement information from the second device or the sixth measurement information from the fourth device, where the fifth measurement result includes ninth time difference information, the sixth measurement result includes tenth time difference information, the ninth time difference information indicates a time difference between a moment at which the fourth device sends the tenth reference signal and a moment at which the second device receives the tenth reference signal, and the tenth time difference information indicates a time difference between a moment at which the second device sends the ninth reference signal and a moment at which the fourth device receives the ninth reference signal.

With reference to the first aspect, in some implementations of the first aspect, the receiving fifth measurement information from the second device and/or sixth measurement information from the fourth device includes: receiving the fifth measurement information from the second device and the sixth measurement information from the fourth device, where the fifth measurement result includes eleventh time difference information, the sixth measurement result includes twelfth time difference information, the eleventh time difference information indicates a time difference between a moment at which the second device sends the ninth reference signal and a moment at which the second device receives the tenth reference signal, and the twelfth time difference information indicates a time difference between a moment at which the fourth device receives the ninth reference signal and a moment at which the fourth device sends the tenth reference signal.

With reference to the first aspect, in some implementations of the first aspect, the fifth measurement result includes fifth angle measurement information and/or the sixth measurement result includes sixth angle measurement information, the fifth angle measurement information is determined based on the tenth reference signal, the fifth angle measurement information indicates an angle of the fourth device relative to the second device, the sixth angle measurement information is determined based on the ninth reference signal, and the sixth angle measurement information indicates an angle of the second device relative to the fourth device.

With reference to the first aspect, in some implementations of the first aspect, the method further includes: determining the relative location between the second device and the fourth device based on at least one of the first measurement information, the second measurement information, the third measurement information, the fourth measurement information, the fifth measurement information, or the sixth measurement information.

With reference to the first aspect, in some implementations of the first aspect, the method further includes: receiving at least one of first prior distribution information, second prior distribution information, or third prior distribution information, where the first prior distribution information is from the second device, the second prior distribution information is from the third device, the third prior distribution information is from the second device or the third device, the first prior distribution information indicates prior distribution of the relative location between the second device and the fourth device, the second prior distribution information indicates prior distribution of the relative location between the third device and the fourth device, and the third prior distribution information indicates prior distribution of the relative location between the second device and the third device.

With reference to the first aspect, in some implementations of the first aspect, the method further includes: determining the relative location between the second device and the fourth device based on at least one of the first measurement information, the second measurement information, the third measurement information, the fourth measurement information, the fifth measurement information, or the sixth measurement information, and at least one of the first prior distribution information, the second prior distribution information, or the third prior distribution information.

With reference to the first aspect, in some implementations of the first aspect, the method further includes: receiving first indication information and second indication information that are from at least one fifth device, where the first indication information indicates positioning accuracy between the at least one fifth device and the fourth device and/or indicates whether a first channel between the at least one fifth device and the fourth device is a line-of-sight LoS propagation channel, the second indication information indicates positioning accuracy between the at least one fifth device and the second device and/or indicates whether a second channel between the at least one fifth device and the second device is a LoS propagation channel, and the at least one fifth device includes the third device.

With reference to the first aspect, in some implementations of the first aspect, the first indication information is determined based on a measurement result of a third reference signal, the second indication information is determined based on a measurement result of a fourth reference signal, and the method further includes: sending resource configuration information of the third reference signal to the fourth device and the at least one fifth device, where the resource configuration information of the third reference signal indicates a resource used by the fourth device to send the third reference signal to the at least one fifth device; and sending resource configuration information of the fourth reference signal to the second device and the at least one fifth device, where the resource configuration information of the fourth reference signal indicates a resource used by the second device to send the fourth reference signal to the at least one fifth device.

With reference to the first aspect, in some implementations of the first aspect, the first indication information is determined based on a measurement result of a third reference signal, the second indication information is determined based on a measurement result of a fourth reference signal, the fourth device and the first device are a same device, and the method further includes: sending resource configuration information of the third reference signal to the at least one fifth device, where the resource configuration information of the third reference signal indicates a resource used by the first device to send the third reference signal to the at least one fifth device; and sending resource configuration information of the fourth reference signal to the second device and the at least one fifth device, where the resource configuration information of the fourth reference signal indicates a resource used by the second device to send the fourth reference signal to the at least one fifth device.

With reference to the first aspect, in some implementations of the first aspect, the method further includes: selecting the third device from the at least one fifth device based on the first indication information and/or the second indication information.

With reference to the first aspect, in some implementations of the first aspect, the error distribution includes a mean and a variance/a covariance matrix of errors, or the error distribution includes a sampling point and a weight of an error.

With reference to the first aspect, in some implementations of the first aspect, the prior distribution is a mean and a covariance matrix/variance of errors of two-dimensional location coordinates or three-dimensional location coordinates, or the prior distribution is a sampling point and a weight of an error of two-dimensional location coordinates or three-dimensional location coordinates.

According to a second aspect, a positioning method is provided. The method may be performed by a third device, or may be performed by a chip, a chip system, or a circuit in the third device. This is not limited in this application. For ease of description, an example in which the method is performed by the third device is used below for description.

The method includes: receiving positioning request information from a first device, where the positioning request information is used to request the third device to initiate relative positioning with a second device; and sending second measurement information to the first device, where the second measurement information indicates a relative location between the second device and the third device, and the second measurement information includes a second measurement result and error distribution of the second measurement result.

Based on the foregoing technical solution, the first device may receive first measurement information from the second device and/or the second measurement information from the third device, where the first measurement information includes a first measurement result and error distribution of the first measurement result, and the second measurement information includes the second measurement result and the error distribution of the second measurement result, so that the first device can determine a result of the relative location between the second device and the third device based on the first measurement information and/or the second measurement information. That is, during relative positioning, the first measurement information reported by the second device and/or the second measurement information reported by the third device each include/includes the error distribution, to obtain a more accurate positioning result.

With reference to the second aspect, in some implementations of the second aspect, the method further includes: receiving resource configuration information of a first reference signal and/or resource configuration information of a second reference signal that are/is from the first device, where the resource configuration information of the first reference signal indicates a resource used by the second device to send the first reference signal to the third device, and the resource configuration information of the second reference signal indicates a resource used by the third device to send the second reference signal to the second device.

With reference to the second aspect, in some implementations of the second aspect, the receiving resource configuration information of a first reference signal and/or resource configuration information of a second reference signal that are/is from the first device includes: receiving the resource configuration information of the first reference signal that is from the first device. The method further includes: receiving the first reference signal based on the resource configuration information of the first reference signal.

With reference to the second aspect, in some implementations of the second aspect, the second measurement result includes second time difference information, and the second time difference information indicates a time difference between a moment at which the second device sends the first reference signal and a moment at which the third device receives the first reference signal.

With reference to the second aspect, in some implementations of the second aspect, the receiving resource configuration information of a first reference signal and/or resource configuration information of a second reference signal that are/is from the first device includes: receiving the resource configuration information of the first reference signal and the resource configuration information of the second reference signal that are from the first device. The method further includes: receiving the first reference signal based on the resource configuration information of the first reference signal, and sending the second reference signal based on the resource configuration information of the second reference signal.

With reference to the second aspect, in some implementations of the second aspect, the second measurement result includes fourth time difference information, and the fourth time difference information indicates a time difference between a moment at which the third device receives the first reference signal and a moment at which the third device sends the second reference signal.

With reference to the second aspect, in some implementations of the second aspect, the second measurement result includes second angle measurement information, the second angle measurement information is determined based on the first reference signal, and the second angle measurement information indicates an angle of the second device relative to the third device.

With reference to the second aspect, in some implementations of the second aspect, the method further includes: sending third measurement information to the first device, where the third measurement information indicates a relative location between the third device and a fourth device, and the third measurement information includes a third measurement result and error distribution of the third measurement result.

With reference to the second aspect, in some implementations of the second aspect, the method further includes: receiving resource configuration information of a seventh reference signal and/or resource configuration information of an eighth reference signal that are/is from the first device, where the resource configuration information of the seventh reference signal indicates a resource used by the third device to send the seventh reference signal to the fourth device, and the resource configuration information of the eighth reference signal indicates a resource used by the fourth device to send the eighth reference signal to the third device.

With reference to the second aspect, in some implementations of the second aspect, the receiving resource configuration information of a seventh reference signal and/or resource configuration information of an eighth reference signal that are/is from the first device includes: receiving the resource configuration information of the eighth reference signal that is from the first device. The method further includes: receiving the eighth reference signal based on the resource configuration information of the eighth reference signal.

With reference to the second aspect, in some implementations of the second aspect, the third measurement result includes fifth time difference information, and the fifth time difference information indicates a time difference between a moment at which the fourth device sends the eighth reference signal and a moment at which the third device receives the eighth reference signal.

With reference to the second aspect, in some implementations of the second aspect, the receiving resource configuration information of a seventh reference signal and/or resource configuration information of an eighth reference signal that are/is from the first device includes: receiving the resource configuration information of the seventh reference signal and the resource configuration information of the eighth reference signal that are from the first device. The method further includes: sending the seventh reference signal based on the resource configuration information of the seventh reference signal; and receiving the eighth reference signal based on the resource configuration information of the eighth reference signal.

With reference to the second aspect, in some implementations of the second aspect, the third measurement result includes seventh time difference information, and the seventh time difference information indicates a time difference between a moment at which the third device sends the seventh reference signal and a moment at which the third device receives the eighth reference signal.

With reference to the second aspect, in some implementations of the second aspect, the third measurement result includes third angle measurement information, the third angle measurement information is determined based on the eighth reference signal, and the third angle measurement information indicates an angle of the fourth device relative to the third device.

With reference to the second aspect, in some implementations of the second aspect, the method further includes: sending at least one of second prior distribution information or third prior distribution information to the first device, where the second prior distribution information indicates prior distribution of the relative location between the third device and the fourth device, and the third prior distribution information indicates prior distribution of the relative location between the second device and the third device.

With reference to the second aspect, in some implementations of the second aspect, the method further includes: sending first indication information and second indication information to the first device, where the first indication information indicates positioning accuracy between the third device and the fourth device and/or indicates whether a first channel between the third device and the fourth device is a line-of-sight LoS propagation channel, and the second indication information indicates positioning accuracy between the third device and the second device and/or indicates whether a second channel between the third device and the second device is a LoS propagation channel.

With reference to the second aspect, in some implementations of the second aspect, the method further includes: receiving resource configuration information of a third reference signal and resource configuration information of a fourth reference signal that are from the first device, where the resource configuration information of the third reference signal indicates a resource used by the fourth device to send the third reference signal to the third device, the resource configuration information of the fourth reference signal indicates a resource used by the second device to send the fourth reference signal to the third device, the first indication information is determined based on a measurement result of the third reference signal, and the second indication information is determined based on a measurement result of the fourth reference signal.

With reference to the second aspect, in some implementations of the second aspect, the error distribution is a mean and a covariance matrix/variance of errors, or the error distribution is a sampling point and a weight of an error.

With reference to the second aspect, in some implementations of the second aspect, the prior distribution is a mean and a covariance matrix/variance of errors of two-dimensional location coordinates or three-dimensional location coordinates, or the prior distribution is a sampling point and a weight of an error of two-dimensional location coordinates or three-dimensional location coordinates.

According to a third aspect, a positioning apparatus is provided. The apparatus may be a first device, or may be a chip, a chip system, or a circuit in the first device. This is not limited in this application. For ease of description, an example in which the apparatus is the first device is used below for description.

The apparatus includes: a transceiver unit, configured to separately send positioning request information to a second device and a third device, where the positioning request information is used to request the second device and the third device to initiate relative positioning. The transceiver unit is further configured to receive first measurement information from the second device and/or second measurement information from the third device, where the first measurement information is used to determine a relative location between the second device and the third device, the first measurement information includes a first measurement result and error distribution of the first measurement result, the second measurement information is used to determine the relative location between the second device and the third device, the second measurement information includes a second measurement result and error distribution of the second measurement result, and the first measurement information and/or the second measurement information are/is used to determine a result of the relative location between the second device and the third device.

Based on the foregoing technical solution, the first device may receive the first measurement information from the second device and/or the second measurement information from the third device, where the first measurement information includes the first measurement result and the error distribution of the first measurement result, and the second measurement information includes the second measurement result and the error distribution of the second measurement result, so that the first device can determine the result of the relative location between the second device and the third device based on the first measurement information and/or the second measurement information. That is, during relative positioning, the first measurement information reported by the second device and/or the second measurement information reported by the third device each include/includes the error distribution, to obtain a more accurate positioning result.

With reference to the third aspect, in some implementations of the third aspect, the transceiver unit is further configured to send resource configuration information of a first reference signal and/or resource configuration information of a second reference signal to the second device and the third device, where the resource configuration information of the first reference signal indicates a resource used by the second device to send the first reference signal to the third device, and the resource configuration information of the second reference signal indicates a resource used by the third device to send the second reference signal to the second device.

With reference to the third aspect, in some implementations of the third aspect, the transceiver unit is specifically configured to receive the first measurement information from the second device or the second measurement information from the third device, where the first measurement result includes first time difference information, the second measurement result includes second time difference information, the first time difference information indicates a time difference between a moment at which the third device sends the second reference signal and a moment at which the second device receives the second reference signal, and the second time difference information indicates a time difference between a moment at which the second device sends the first reference signal and a moment at which the third device receives the first reference signal.

With reference to the third aspect, in some implementations of the third aspect, the transceiver unit is specifically configured to receive the first measurement information from the second device and the second measurement information from the third device, where the first measurement result includes third time difference information, the second measurement result includes fourth time difference information, the third time difference information indicates a time difference between a moment at which the second device sends the first reference signal and a moment at which the second device receives the second reference signal, and the fourth time difference information indicates a time difference between a moment at which the third device receives the first reference signal and a moment at which the third device sends the second reference signal.

With reference to the third aspect, in some implementations of the third aspect, the first measurement result includes first angle measurement information and/or the second measurement result includes second angle measurement information, the first angle measurement information is determined based on the second reference signal, the first angle measurement information indicates an angle of the third device relative to the second device, the second angle measurement information is determined based on the first reference signal, and the second angle measurement information indicates an angle of the second device relative to the third device.

With reference to the third aspect, in some implementations of the third aspect, the transceiver unit is further configured to receive third measurement information from the third device and/or fourth measurement information from a fourth device, where the third measurement information is used to determine a relative location between the third device and the fourth device, the third measurement information includes a third measurement result and error distribution of the third measurement result, the fourth measurement information is used to determine the relative location between the third device and the fourth device, and the fourth measurement information includes a fourth measurement result and error distribution of the fourth measurement result.

With reference to the third aspect, in some implementations of the third aspect, the transceiver unit is further configured to send resource configuration information of a seventh reference signal and/or resource configuration information of an eighth reference signal to the third device and the fourth device, where the resource configuration information of the seventh reference signal indicates a resource used by the third device to send the seventh reference signal to the fourth device, and the resource configuration information of the eighth reference signal indicates a resource used by the fourth device to send the eighth reference signal to the third device.

With reference to the third aspect, in some implementations of the third aspect, the transceiver unit is specifically configured to receive the third measurement information from the third device or the fourth measurement information from the fourth device, where the third measurement result includes fifth time difference information, the fourth measurement result includes sixth time difference information, the fifth time difference information indicates a time difference between a moment at which the fourth device sends the eighth reference signal and a moment at which the third device receives the eighth reference signal, and the sixth time difference information indicates a time difference between a moment at which the third device sends the seventh reference signal and a moment at which the fourth device receives the seventh reference signal.

With reference to the third aspect, in some implementations of the third aspect, the transceiver unit is specifically configured to receive the third measurement information from the third device and the fourth measurement information from the fourth device, where the third measurement result includes seventh time difference information, the fourth measurement result includes eighth time difference information, the seventh time difference information indicates a time difference between a moment at which the third device sends the seventh reference signal and a moment at which the third device receives the eighth reference signal, and the eighth time difference information indicates a time difference between a moment at which the fourth device receives the seventh reference signal and a moment at which the fourth device sends the eighth reference signal.

With reference to the third aspect, in some implementations of the third aspect, the third measurement result includes third angle measurement information and/or the fourth measurement result includes fourth angle measurement information, the third angle measurement information is determined based on the eighth reference signal, the third angle measurement information indicates an angle of the fourth device relative to the third device, the fourth angle measurement information is determined based on the seventh reference signal, and the fourth angle measurement information indicates an angle of the third device relative to the fourth device.

With reference to the third aspect, in some implementations of the third aspect, the transceiver unit is further configured to receive fifth measurement information from the second device and/or sixth measurement information from the fourth device, where the fifth measurement information is used to determine a relative location between the second device and the fourth device, the fifth measurement information includes a fifth measurement result and error distribution of the fifth measurement result, the sixth measurement information is used to determine the relative location between the second device and the fourth device, and the sixth measurement information includes a sixth measurement result and error distribution of the sixth measurement result.

With reference to the third aspect, in some implementations of the third aspect, the transceiver unit is further configured to send resource configuration information of a ninth reference signal and/or resource configuration information of a tenth reference signal to the second device and the fourth device, where the resource configuration information of the ninth reference signal indicates a resource used by the second device to send the ninth reference signal to the fourth device, and the resource configuration information of the tenth reference signal indicates a resource used by the fourth device to send the tenth reference signal to the second device.

With reference to the third aspect, in some implementations of the third aspect, the transceiver unit is specifically configured to receive the fifth measurement information from the second device or the sixth measurement information from the fourth device, where the fifth measurement result includes ninth time difference information, the sixth measurement result includes tenth time difference information, the ninth time difference information indicates a time difference between a moment at which the fourth device sends the tenth reference signal and a moment at which the second device receives the tenth reference signal, and the tenth time difference information indicates a time difference between a moment at which the second device sends the ninth reference signal and a moment at which the fourth device receives the ninth reference signal.

With reference to the third aspect, in some implementations of the third aspect, the transceiver unit is specifically configured to receive the fifth measurement information from the second device and the sixth measurement information from the fourth device, where the fifth measurement result includes eleventh time difference information, the sixth measurement result includes twelfth time difference information, the eleventh time difference information indicates a time difference between a moment at which the second device sends the ninth reference signal and a moment at which the second device receives the tenth reference signal, and the twelfth time difference information indicates a time difference between a moment at which the fourth device receives the ninth reference signal and a moment at which the fourth device sends the tenth reference signal.

With reference to the third aspect, in some implementations of the third aspect, the fifth measurement result includes fifth angle measurement information and/or the sixth measurement result includes sixth angle measurement information, the fifth angle measurement information is determined based on the tenth reference signal, the fifth angle measurement information indicates an angle of the fourth device relative to the second device, the sixth angle measurement information is determined based on the ninth reference signal, and the sixth angle measurement information indicates an angle of the second device relative to the fourth device.

With reference to the third aspect, in some implementations of the third aspect, the apparatus further includes a processing unit, configured to determine the relative location between the second device and the fourth device based on at least one of the first measurement information, the second measurement information, the third measurement information, the fourth measurement information, the fifth measurement information, or the sixth measurement information.

With reference to the third aspect, in some implementations of the third aspect, the transceiver unit is further configured to receive at least one of first prior distribution information, second prior distribution information, or third prior distribution information, where the first prior distribution information is from the second device, the second prior distribution information is from the third device, the third prior distribution information is from the second device or the third device, the first prior distribution information indicates prior distribution of the relative location between the second device and the fourth device, the second prior distribution information indicates prior distribution of the relative location between the third device and the fourth device, and the third prior distribution information indicates prior distribution of the relative location between the second device and the third device.

With reference to the third aspect, in some implementations of the third aspect, the processing unit is further configured to determine the relative location between the second device and the fourth device based on at least one of the first measurement information, the second measurement information, the third measurement information, the fourth measurement information, the fifth measurement information, or the sixth measurement information, and at least one of the first prior distribution information, the second prior distribution information, or the third prior distribution information.

With reference to the third aspect, in some implementations of the third aspect, the transceiver unit is further configured to receive first indication information and second indication information that are from at least one fifth device, where the first indication information indicates positioning accuracy between the at least one fifth device and the fourth device and/or indicates whether a first channel between the at least one fifth device and the fourth device is a line-of-sight LoS propagation channel, the second indication information indicates positioning accuracy between the at least one fifth device and the second device and/or indicates whether a second channel between the at least one fifth device and the second device is a LoS propagation channel, and the at least one fifth device includes the third device.

With reference to the third aspect, in some implementations of the third aspect, the first indication information is determined based on a measurement result of a third reference signal, the second indication information is determined based on a measurement result of a fourth reference signal, and the transceiver unit is further configured to: send resource configuration information of the third reference signal to the fourth device and the at least one fifth device, where the resource configuration information of the third reference signal indicates a resource used by the fourth device to send the third reference signal to the at least one fifth device; and send resource configuration information of the fourth reference signal to the second device and the at least one fifth device, where the resource configuration information of the fourth reference signal indicates a resource used by the second device to send the fourth reference signal to the at least one fifth device.

With reference to the third aspect, in some implementations of the third aspect, the first indication information is determined based on a measurement result of a third reference signal, the second indication information is determined based on a measurement result of a fourth reference signal, the fourth device and the first device are a same device, and the transceiver unit is further configured to: send resource configuration information of the third reference signal to the at least one fifth device, where the resource configuration information of the third reference signal indicates a resource used by the first device to send the third reference signal to the at least one fifth device; and send resource configuration information of the fourth reference signal to the second device and the at least one fifth device, where the resource configuration information of the fourth reference signal indicates a resource used by the second device to send the fourth reference signal to the at least one fifth device.

With reference to the third aspect, in some implementations of the third aspect, the processing unit is further configured to select the third device from the at least one fifth device based on the first indication information and/or the second indication information.

With reference to the third aspect, in some implementations of the third aspect, the error distribution includes a mean and a variance/a covariance matrix of errors, or the error distribution includes a sampling point and a weight of an error.

With reference to the third aspect, in some implementations of the third aspect, the prior distribution is a mean and a covariance matrix/variance of errors of two-dimensional location coordinates or three-dimensional location coordinates, or the prior distribution is a sampling point and a weight of an error of two-dimensional location coordinates or three-dimensional location coordinates.

According to a fourth aspect, a positioning apparatus is provided. The apparatus may be a third device, or may be a chip, a chip system, or a circuit in the third device. This is not limited in this application. For ease of description, an example in which the apparatus is the third device is used below for description.

The apparatus includes: a transceiver unit, configured to receive positioning request information from a first device, where the positioning request information is used to request the third device to initiate relative positioning with a second device. The transceiver unit is further configured to send second measurement information to the first device, where the second measurement information indicates a relative location between the second device and the third device, and the second measurement information includes a second measurement result and error distribution of the second measurement result.

Based on the foregoing technical solution, the first device may receive first measurement information from the second device and/or the second measurement information from the third device, where the first measurement information includes a first measurement result and error distribution of the first measurement result, and the second measurement information includes the second measurement result and the error distribution of the second measurement result, so that the first device can determine a result of the relative location between the second device and the third device based on the first measurement information and/or the second measurement information. That is, during relative positioning, the first measurement information reported by the second device and/or the second measurement information reported by the third device each include/includes the error distribution, to obtain a more accurate positioning result.

With reference to the fourth aspect, in some implementations of the fourth aspect, the transceiver unit is further configured to receive resource configuration information of a first reference signal and/or resource configuration information of a second reference signal that are/is from the first device, where the resource configuration information of the first reference signal indicates a resource used by the second device to send the first reference signal to the third device, and the resource configuration information of the second reference signal indicates a resource used by the third device to send the second reference signal to the second device.

With reference to the fourth aspect, in some implementations of the fourth aspect, the transceiver unit is specifically configured to: receive the resource configuration information of the first reference signal that is from the first device, and receive the first reference signal based on the resource configuration information of the first reference signal.

With reference to the fourth aspect, in some implementations of the fourth aspect, the second measurement result includes second time difference information, and the second time difference information indicates a time difference between a moment at which the second device sends the first reference signal and a moment at which the third device receives the first reference signal.

With reference to the fourth aspect, in some implementations of the fourth aspect, the transceiver unit is specifically configured to: receive the resource configuration information of the first reference signal and the resource configuration information of the second reference signal that are from the first device, receive the first reference signal based on the resource configuration information of the first reference signal, and send the second reference signal based on the resource configuration information of the second reference signal.

With reference to the fourth aspect, in some implementations of the fourth aspect, the second measurement result includes fourth time difference information, and the fourth time difference information indicates a time difference between a moment at which the third device receives the first reference signal and a moment at which the third device sends the second reference signal.

With reference to the fourth aspect, in some implementations of the fourth aspect, the second measurement result includes second angle measurement information, the second angle measurement information is determined based on the first reference signal, and the second angle measurement information indicates an angle of the second device relative to the third device.

With reference to the fourth aspect, in some implementations of the fourth aspect, the transceiver unit is further configured to send third measurement information to the first device, where the third measurement information indicates a relative location between the third device and a fourth device, and the third measurement information includes a third measurement result and error distribution of the third measurement result.

With reference to the fourth aspect, in some implementations of the fourth aspect, the transceiver unit is further configured to receive resource configuration information of a seventh reference signal and/or resource configuration information of an eighth reference signal that are/is from the first device, where the resource configuration information of the seventh reference signal indicates a resource used by the third device to send the seventh reference signal to the fourth device, and the resource configuration information of the eighth reference signal indicates a resource used by the fourth device to send the eighth reference signal to the third device.

With reference to the fourth aspect, in some implementations of the fourth aspect, the transceiver unit is specifically configured to: receive the resource configuration information of the eighth reference signal that is from the first device, and receive the eighth reference signal based on the resource configuration information of the eighth reference signal.

With reference to the fourth aspect, in some implementations of the fourth aspect, the third measurement result includes fifth time difference information, and the fifth time difference information indicates a time difference between a moment at which the fourth device sends the eighth reference signal and a moment at which the third device receives the eighth reference signal.

With reference to the fourth aspect, in some implementations of the fourth aspect, the transceiver unit is specifically configured to: receive the resource configuration information of the seventh reference signal and the resource configuration information of the eighth reference signal that are from the first device, send the seventh reference signal based on the resource configuration information of the seventh reference signal, and receive the eighth reference signal based on the resource configuration information of the eighth reference signal.

With reference to the fourth aspect, in some implementations of the fourth aspect, the third measurement result includes seventh time difference information, and the seventh time difference information indicates a time difference between a moment at which the third device sends the seventh reference signal and a moment at which the third device receives the eighth reference signal.

With reference to the fourth aspect, in some implementations of the fourth aspect, the third measurement result includes third angle measurement information, the third angle measurement information is determined based on the eighth reference signal, and the third angle measurement information indicates an angle of the fourth device relative to the third device.

With reference to the fourth aspect, in some implementations of the fourth aspect, the transceiver unit is further configured to send at least one of second prior distribution information or third prior distribution information to the first device, where the second prior distribution information indicates prior distribution of the relative location between the third device and the fourth device, and the third prior distribution information indicates prior distribution of the relative location between the second device and the third device.

With reference to the fourth aspect, in some implementations of the fourth aspect, the transceiver unit is further configured to send first indication information and second indication information to the first device, where the first indication information indicates positioning accuracy between the third device and the fourth device and/or indicates whether a first channel between the third device and the fourth device is a line-of-sight LoS propagation channel, and the second indication information indicates positioning accuracy between the third device and the second device and/or indicates whether a second channel between the third device and the second device is a LoS propagation channel.

With reference to the fourth aspect, in some implementations of the fourth aspect, the transceiver unit is further configured to receive resource configuration information of a third reference signal and resource configuration information of a fourth reference signal that are from the first device, where the resource configuration information of the third reference signal indicates a resource used by the fourth device to send the third reference signal to the third device, the resource configuration information of the fourth reference signal indicates a resource used by the second device to send the fourth reference signal to the third device, the first indication information is determined based on a measurement result of the third reference signal, and the second indication information is determined based on a measurement result of the fourth reference signal.

With reference to the fourth aspect, in some implementations of the fourth aspect, the error distribution is a mean and a covariance matrix/variance of errors, or the error distribution is a sampling point and a weight of an error.

With reference to the fourth aspect, in some implementations of the fourth aspect, the prior distribution is a mean and a covariance matrix/variance of errors of two-dimensional location coordinates or three-dimensional location coordinates, or the prior distribution is a sampling point and a weight of an error of two-dimensional location coordinates or three-dimensional location coordinates.

According to a fifth aspect, a communication apparatus is provided, including at least one processor, where the at least one processor is coupled to at least one memory, and the at least one processor is configured to execute a computer program or instructions stored in the at least one memory, so that the communication apparatus performs the method in any one of the first aspect and the second aspect or the possible implementations of the first aspect and the second aspect.

According to a sixth aspect, a computer-readable storage medium is provided. The computer-readable storage medium stores a computer program or instructions, and when the computer program or the instructions are run on a computer, the computer is enabled to perform the method in any one of the first aspect and the second aspect or the possible implementations of the first aspect and the second aspect.

According to a seventh aspect, a chip system is provided, including a processor, where the processor is configured to execute a computer program or instructions in a memory, to implement the method in any one of the first aspect and the second aspect or the possible implementations of the first aspect and the second aspect.

According to an eighth aspect, a computer program product is provided. The computer program product includes a computer program or instructions, and when the computer program or the instructions are run, the method in any one of the first aspect and the second aspect or the possible implementations of the first aspect and the second aspect is performed.

### BRIEF DESCRIPTION OF DRAWINGS

FIG. 1 shows a positioning architecture to which an embodiment of this application is applicable;
FIG. 2 is a schematic flowchart of a positioning method according to an embodiment of this application;
FIG. 3A and FIG. 3B are another schematic flowchart of a positioning method according to an embodiment of this application;
FIG. 4A and FIG. 4B are another schematic flowchart of a positioning method according to an embodiment of this application;
FIG. 5 is another schematic flowchart of a positioning method according to an embodiment of this application;
FIG. 6 is another schematic flowchart of a positioning method according to an embodiment of this application;
FIG. 7 is a schematic block diagram of a positioning apparatus according to an embodiment of this application;
FIG. 8 is another schematic block diagram of a positioning apparatus according to an embodiment of this application; and
FIG. 9 is another schematic block diagram of a positioning apparatus according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a future 6th generation (6th generation, 6G) system. The technical solutions in embodiments of this application may be further applied to device-to-device (device-to-device, D2D) communication, sidelink (sidelink, SL) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

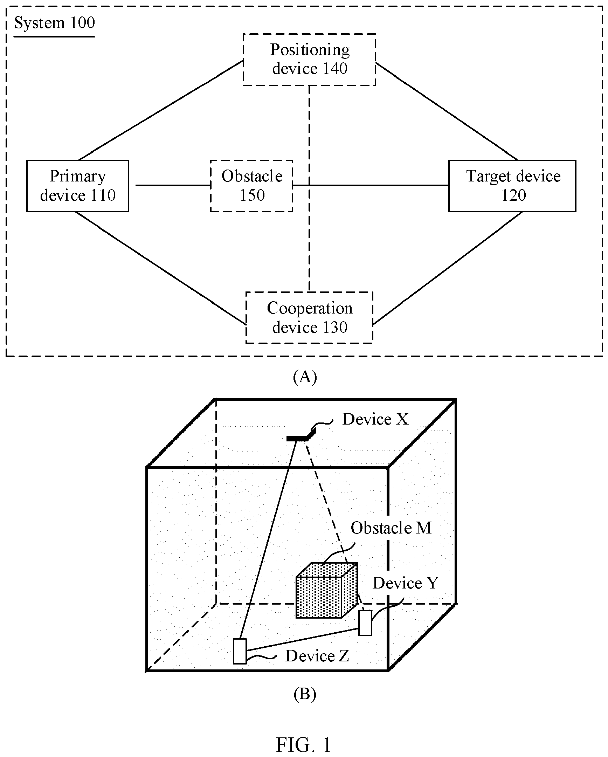

For ease of understanding embodiments of this application, a positioning architecture to which an embodiment of this application is applicable is first briefly described with reference to FIG. 1.

FIG. 1 is a schematic diagram of an application scenario to this application. As shown in (A) in FIG. 1, a positioning system 100 may include but is not limited to the following devices (or referred to as a function network element, a functional entity, a node, or the like).

A primary device 110 is a device that needs to obtain a relative location between the primary device and a target device, and includes but is not limited to a terminal device (terminal equipment), an access network device, a short-distance communication device, and the like. Specifically, the access network device may be a radio access network (radio access network, RAN) device, a next generation node base station (next generation node base station, gNB), an evolved node base station (evolved node base station, eNB), or the like. The terminal device may include various handheld devices, vehicle-mounted devices, wearable devices, or computing devices that have a wireless communication function, or another processing device connected to a wireless modem, and terminals in various forms, like a mobile station (mobile station, MS), a terminal (terminal), or a software terminal, for example, a water meter, an electricity meter, a sensor, a wireless terminal (for example, a smart STB, a game console and a home appliance like a television) in a smart home (smart home), or a terminal device (for example, a vehicle or an entire vehicle, a vehicle-mounted terminal device, a vehicle-mounted module, or an on-board unit (on-board unit, OBU)) in V2X. Optionally, the primary device may implement estimation of a location between the primary device and the target device.

The target device 120 is a device that needs to be positioned, and includes but is not limited to a terminal device (terminal equipment), a short-distance communication device, and the like. The terminal device may include various handheld devices, vehicle-mounted devices, wearable devices, or computing devices that have a wireless communication function, or another processing device connected to a wireless modem, and terminals in various forms, like a mobile station (mobile station, MS), a terminal (terminal), or a software terminal, for example, a water meter, an electricity meter, a sensor, a wireless terminal (for example, a smart STB, a game console and a home appliance like a television) in a smart home (smart home), or a terminal device (for example, a vehicle or an entire vehicle, a vehicle-mounted terminal device, a vehicle-mounted module, or an on-board unit (on-board unit, OBU)) in V2X.

In addition, in embodiments of this application, the terminal device may alternatively be user equipment in an internet of things (internet of things, IoT) system. IoT is an important part of future development of information technologies. A main technical feature of the IoT is to connect an object to a network by using a communication technology, to implement an intelligent network for human-machine interconnection and thing-thing interconnection.

Optionally, the positioning system 100 in (A) in FIG. 1 may further include a cooperation device 130. The cooperation device 130 includes but is not limited to an access network device, a terminal device, a short-distance communication device, a smart camera, or the like.

It should be understood that there may be a plurality of cooperation devices 130 in (A) in FIG. 1.

Optionally, the positioning system 100 in (A) in FIG. 1 may further include a positioning device 140. The positioning device 140 may also be referred to as a location server (location server), and may be configured to implement estimation of the location between the primary device and the target device. The positioning device 140 may be deployed inside a core network. In other words, the positioning device 140 also belongs to a core network element. For example, the positioning device may communicate with the primary device and/or the target device by using a mobility management function (access and mobility management function, AMF) network element (not shown in the figure). For example, the positioning device may communicate with the primary device and/or the target device according to an LTE positioning protocol (LTE positioning protocol, LPP) or an NR positioning protocol (NR positioning protocol A, NRPPa).

For example, the positioning device 140 shown in (A) in FIG. 1 may be a location management function (location management function, LMF) network element.

In some embodiments, when a scenario in (A) in FIG. 1 is an indoor home scenario, an access point (access point AP) located on a roof, a mobile phone, a speaker, a robotic vacuum cleaner, or another terminal device is included. The primary device and the target device may be one of the foregoing devices. (B) in FIG. 1 is an example in which the scenario shown in (A) in FIG. 1 is the indoor home scenario. A device X is an example of the primary device 110, a device Y is an example of the target device 120, and a device Z is an example of the cooperation device 130.

In some embodiments, when the scenario shown in (A) in FIG. 1 is a V2X scenario, a roadside communication unit (Roadside Unit, RSU), a base station, a vehicle, or another device is included, and the primary device and the target device may be one of the foregoing devices.

It should be understood that (A) in FIG. 1 and (B) in FIG. 1 are merely examples of an application scenario of this application. A scenario to which the method can be applied is not limited in embodiments of this application. For example, the method is also applicable to another positioning architecture including a device that can implement a corresponding function.

In the scenarios described in (A) in FIG. 1 and (B) in FIG. 1, there may be a positioning requirement between the primary device 110 and the target device 120. For example, the primary device 110 is an access point AP, and the target device 120 is a robotic vacuum cleaner. The access point AP needs to learn of information about a relative location between the access point and the robotic vacuum cleaner, to optimize a cleaning track of the robotic vacuum cleaner. For another example, the primary device 110 is a vehicle A, and the target device 120 is a vehicle B, the vehicle A needs to learn of a relative location between the vehicle A and the vehicle B, for path planning and self-driving.

A principle of an existing positioning technology mainly includes a neighboring relationship-based positioning manner, a radio frequency fingerprint-based positioning manner, a spatial geometry relationship-based positioning manner, and the like. The following briefly describes these positioning manners.
(a). The neighboring relationship-based positioning manner is described as follows: A base station with a known absolute location is used as a reference point, and then positioning is performed based on a neighboring relationship between a to-be-positioned object and the base station. For example, when a to-be-positioned mobile phone is in a coverage area of a base station/or receives a highest reference signal received power of a base station, an approximate location of the mobile phone may be determined based on absolute location information of the base station. This method is easy to implement, but poor in positioning accuracy.
(b). The radio frequency fingerprint-based positioning manner is described as follows: A channel needs to be measured in advance for each location in a to-be-positioned scenario, and then some features of the channel are extracted and compressed based on a measurement result, to form a radio frequency fingerprint map; and when a device has a positioning requirement, the channel is measured, and then the feature of the channel is reported and matched with the radio frequency fingerprint map, to finally determine a location. The method has a high requirement on construction of the fingerprint map in an early stage and maintenance of the fingerprint map in a later stage.
(c). The spatial geometry relationship-based positioning manner is specifically classified into multi-anchor positioning and single-anchor positioning. In multi-anchor positioning, a plurality of base stations need to send and receive reference signals to and from a terminal, absolute propagation time in which signals at the terminal reach the plurality of base stations, or a propagation time difference is determined, and finally a location of the terminal device is determined based on a spatial set relationship and known anchor location information. In single-anchor positioning, a plurality of antennas usually need to be installed on a base station, a reference signal is sent and received between a single base station and a terminal to determine both an angle and a distance between a location of the terminal and a location of the base station, and then the location of the terminal is determined based on the known location of the base station. This method is also the most popular positioning method in 5G positioning.

On a sidelink (sidelink, SL), when relative positioning is performed based on a spatial geometry relationship, positioning mainly depends on a first path of electromagnetic wave propagation between two terminal devices to determine a distance and an angle between the two devices. As a result, positioning accuracy is limited by a channel environment, especially a non-line-of-sight (non-line-of-sight, NLoS) propagation scenario. The non-line-of-sight (non-line-of-sight, NLoS) propagation scenario may be understood as follows: When the first path between the two terminal devices is blocked by an object, for example, there is an obstacle 150 on a first path between the primary device 110 and the target device 120 shown in (A) in FIG. 1, and signal propagation between the primary device 110 and the target device 120 is NLoS propagation. For another example, there is an obstacle M on a first path between the device X and the device Y shown in (B) in FIG. 1. Signal propagation between the device X and the device Y is NLoS propagation. Because a propagation speed of an electromagnetic wave in an obstacle is reduced, propagation time of a signal on the first path between the primary device and the target device is long, and energy attenuation of the first path is large. Consequently, a distance measurement value deviates.

During relative positioning, how to obtain a more accurate positioning result becomes a problem to be resolved urgently.

In view of this, this application provides a positioning method, to obtain the more accurate positioning result.

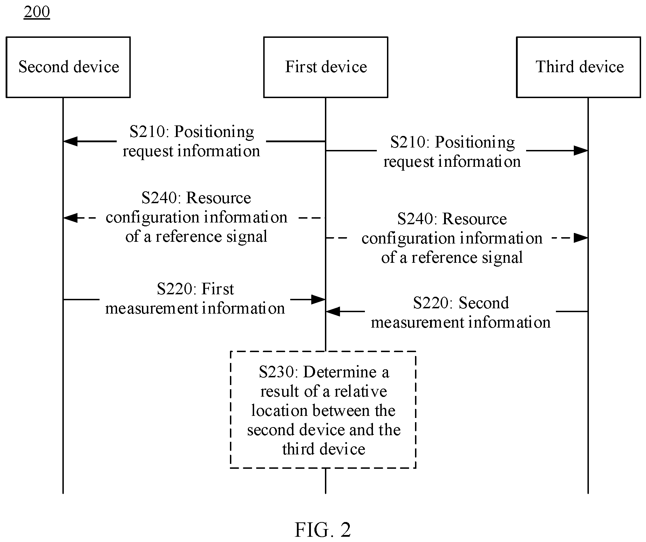

FIG. 2 is a schematic flowchart of a positioning method according to an embodiment of this application. The method 200 shown in FIG. 2 may be performed by the system 100 shown in (A) in FIG. 1.

S210: A first device separately sends positioning request information to a second device and a third device, where the positioning request information is used to request the second device and the third device to initiate relative positioning.

When the first device needs to obtain a relative location between the second device and the third device, the first device may separately send the positioning request information (positioning request information) to the second device and the third device, where the positioning request information is used to request the second device and the third device to initiate relative positioning. It may also be understood that the positioning request information is used to request the second device and the third device to initiate relative positioning and to report a relative positioning result to the first device. Specifically, the relative positioning result may include first measurement information and/or second measurement information below.

It should be understood that a sequence of sending the positioning request information by the first device to the second device and the third device is not limited, and the positioning request information may be first sent to the second device, may be first sent to the third device, or may be simultaneously sent to the second device and the third device.

It should be further understood that, the positioning request information sent by the first device to the second device may be referred to as first positioning request information, and the positioning request information sent to the third device may be referred to as second positioning request information. Content of the first positioning request information may be the same as that of the second positioning request information. For example, both the first positioning request information and the second positioning request information include identifiers of the second device and the third device, and may be simultaneously sent to the second device and the third device in broadcast mode. Alternatively, content of the first positioning request information may be different from that of the second positioning request information. For example, the first positioning request information carries information for requesting the second device and the third device to initiate relative positioning, and the first positioning request information includes other information that needs to be sent to the second device. The first positioning request information may be sent to the second device in unicast mode. Optionally, the second positioning request information carries information for requesting the second device and the third device to initiate relative positioning, and the second positioning request information includes other information that needs to be sent to the third device. The second positioning request information may be sent to the third device in unicast mode. The foregoing description is merely an example. During actual application, content and sending forms of the first positioning request information and the second positioning request information are not limited in this application.

S220: The second device sends the first measurement information to the first device, and/or the third device sends the second measurement information to the first device. Correspondingly, the first device receives the first measurement information and/or the second measurement information, where the first measurement information is used to determine the relative location between the second device and the third device, the first measurement information includes a first measurement result and error distribution of the first measurement result, the second measurement information is used to determine the relative location between the second device and the third device, the second measurement information includes a second measurement result and error distribution of the second measurement result, and the first measurement information and/or the second measurement information are/is used to determine a result of the relative location between the second device and the third device.

The second device reports the first measurement information to the first device after receiving the positioning request information, where the first measurement information includes the first measurement result and the error distribution of the first measurement result. Alternatively, similarly, the third device reports the second measurement information to the first device after receiving the positioning request information, where the second measurement information includes the second measurement result and the error distribution of the second measurement result. The first measurement information and/or the second measurement information may be used by the first device to determine a result of the relative location between the second device and the third device.

Based on the foregoing technical solution, during relative positioning, the first measurement information reported by the second device and/or the second measurement information reported by the third device each include/includes the error distribution, to obtain a more accurate positioning result.

It should be understood that in S220, only the second device may report the first measurement information, and the third device does not report the second measurement information. Only the third device may report the second measurement information, and the second device does not report the first measurement information. Alternatively, the second device may report the first measurement information, and the third device may report the second measurement information. A reporting sequence of the second device and the third device may be preconfigured in the second device and the third device, or may be indicated by the first device. This is not limited in this application.

Optionally, the method 200 further includes: S230: The first device determines the result of the relative location between the second device and the third device based on the first measurement information and/or the second measurement information.

Optionally, the first device may further determine error distribution of the result of the relative location between the second device and the third device.

The first device may determine the result of the relative location between the second device and the third device and the error distribution of the result of the relative location based on the first measurement result and the error distribution of the first measurement result, and/or the second measurement result and the error distribution of the second measurement result.

Optionally, before S220, the method 200 further includes: S240: The first device separately sends resource configuration information of a reference signal to the second device and the third device, where a reference signal configured based on the resource configuration information of the reference signal is used for relative positioning of the second device and the third device. In other words, the resource configuration information of the reference signal is used by the second device and the third device to determine the first measurement information and/or the second measurement information.

Specifically, the resource configuration information of the reference signal may include at least one of a time-frequency location of the reference signal, a quantity of ports, and reference signal sequence information.

It should be understood that the resource configuration information of the reference signal sent to the second device and the third device may be the same, or may be different, provided that a resource for sending a reference signal between the second device and the third device and a resource for receiving a reference signal between the second device and the third device are included. This is not limited in this application.

Optionally, resource configuration of the reference signal may be determined by the first device, or may be determined by the second device or the third device. When the resource configuration is determined by the first device, in S240, the first device separately sends the resource configuration information of the reference signal to the second device and the third device. For specific cases in which the resource configuration is determined by the second device and the third device, refer to descriptions of S302a, S302b, and S302c in the following method 300. FIG. 2 shows a case in which the resource configuration is determined by the first device.

Therefore, the second device and the third device may perform relative location measurement based on the resource configuration information of the reference signal, to obtain the first measurement information and/or the second measurement information, and report the first measurement information and/or the second measurement information to the first device.

Specifically, the resource configuration information of the reference signal includes resource configuration information of a first reference signal and/or resource configuration information of a second reference signal, the resource configuration information of the first reference signal indicates a resource used by the second device to send the first reference signal to the third device, and the resource configuration information of the second reference signal indicates a resource used by the third device to send the second reference signal to the second device. Sending the resource configuration information of the reference signal to the second device and the third device includes: sending the resource configuration information of the first reference signal and/or the resource configuration information of the second reference signal to the second device and the third device. To be specific, sending the resource configuration information of the reference signal to the second device and the third device includes the following three cases. A case 1 and a case 2 are applicable to a scenario in which clocks of the second device and the third device are completely synchronized, and a case 3 is applicable to a scenario in which clocks of the second device and the third device are not completely synchronized.

### Case 1:

The first device sends the resource configuration information of the first reference signal to both the second device and the third device. In this case, the second device sends the first reference signal to the third device based on the resource configuration information of the first reference signal, and correspondingly, the third device receives the first reference signal based on the resource configuration information of the first reference signal.

### Case 2:

The first device sends the resource configuration information of the second reference signal to both the second device and the third device. In this case, the third device sends the second reference signal to the second device based on the resource configuration information of the second reference signal, and correspondingly, the second device receives the second reference signal based on the resource configuration information of the second reference signal.

### Case 3:

The first device sends the resource configuration information of the first reference signal and the resource configuration information of the second reference signal to both the second device and the third device. In this case, the second device sends the first reference signal to the third device based on the resource configuration information of the first reference signal, and correspondingly, the third device receives the first reference signal based on the resource configuration information of the first reference signal. In addition, the third device further sends the second reference signal to the second device based on the resource configuration information of the second reference signal, and correspondingly, the second device further receives the second reference signal based on the resource configuration information of the second reference signal. A sequence of sending the first reference signal by the second device and sending the second reference signal by the third device is not limited.

It should be understood that, in the case 1, in S220, that the first device receives the first measurement information from the second device and/or the second measurement information from the third device includes: The first device receives the second measurement information from the third device. The second measurement result in the second measurement information includes second time difference information, the error distribution of the second measurement result includes error distribution of the second time difference information, and the second time difference information indicates a time difference between a moment at which the second device sends the first reference signal and a moment at which the third device receives the first reference signal. The time difference is time of propagation of the first reference signal from the second device to the third device, and the time difference is multiplied by a speed of light to determine an estimated value of a straight-line distance from the second device to the third device. In addition, error distribution of the estimated distance value may be determined based on error distribution of the time difference. It should be understood that the first reference signal is a reference signal sent by the second device to the third device.

In the case 2, in S220, that the first device receives the first measurement information from the second device and/or the second measurement information from the third device includes: The first device receives the first measurement information from the second device. The first measurement result in the first measurement information includes first time difference information, the error distribution of the first measurement result includes error distribution of the first time difference information, and the first time difference information indicates a time difference between a moment at which the third device sends the second reference signal and a moment at which the second device receives the second reference signal. The time difference is time of propagation of the second reference signal from the third device to the second device, and the time difference is multiplied by a speed of light to determine an estimated value of a straight-line distance from the third device to the second device. In addition, error distribution of the estimated distance value may be determined based on error distribution of the time difference. It should be understood that the second reference signal is a reference signal sent by the third device to the second device.

In the case 3, in S220, that the first device receives the first measurement information from the second device and/or the second measurement information from the third device includes: The first device receives the first measurement information from the second device and the second measurement information from the third device. The first measurement result in the first measurement information includes third time difference information, the error distribution of the first measurement result includes error distribution of the third time difference information, and the third time difference information indicates a time difference between a moment at which the second device sends the first reference signal and a moment at which the second device receives the second reference signal. The second measurement result in the second measurement information includes fourth time difference information, the error distribution of the second measurement result includes error distribution of the fourth time difference information, and the fourth time difference information indicates a time difference between a moment at which the third device receives the first reference signal and a moment at which the third device sends the second reference signal. Specifically, when the second device first sends the first reference signal and the third device sends the second reference signal later, a third time difference corresponds to a result obtained by subtracting, from the moment at which the second device receives the second reference signal, the moment at which the second device sends the first reference signal, a fourth time difference corresponds to a result obtained by subtracting, from the moment at which the third device sends the second reference signal, the moment at which the third device receives the first reference signal, and the fourth time difference is subtracted from the third time difference to obtain a sum of time of propagation of the first reference signal from the second device to the third device and time of propagation of the second reference signal from the third device to the second device. Because round-trip time is equal, one-way propagation time of the signal can be obtained, and the one-way propagation time is multiplied by a speed of light to determine the estimated value of the straight-line distance from the third device to the second device. In addition, the error distribution of the estimated distance value may be determined based on the error distribution of the time difference. When the third device first sends the second reference signal and the second device sends the first reference signal later, a third time difference corresponds to a result obtained by subtracting, from the moment at which the second device sends the first reference signal, the moment at which the second device receives the second reference signal, a fourth time difference corresponds to a result obtained by subtracting, from the moment at which the third device receives the first reference signal, the moment at which the third device sends the second reference signal, and the third time difference is subtracted from the fourth time difference to obtain a sum of time of propagation of the first reference signal from the second device to the third device and time of propagation of the second reference signal from the third device to the second device. Because round-trip time is equal, one-way propagation time of the signal can be obtained, and the one-way propagation time is multiplied by a speed of light to determine the estimated value of the straight-line distance from the third device to the second device. In addition, the error distribution of the estimated distance value may be determined based on the error distribution of the time difference.

In an implementation, an error distribution form of the time difference may be a mean and a variance/standard deviation of errors, or may be a sampling point and a weight of a time difference error.

Optionally, in any one of the foregoing three cases, the first measurement result may further include first angle measurement information, the second measurement result may further include second angle measurement information, the first angle measurement information is determined based on the second reference signal, the first angle measurement information indicates an angle of the third device relative to the second device, the second angle measurement information is determined based on the first reference signal, and the second angle measurement information indicates an angle of the second device relative to the third device. In other words, when the third device sends the second reference signal, the second device may determine the angle of the third device relative to the second device based on the second reference signal, and the first angle measurement information may be carried in the first measurement information. When the second device sends the first reference signal, the third device may determine the angle of the second device relative to the third device based on the first reference signal, and the second angle measurement information may be carried in the second measurement information.

Optionally, in any one of the foregoing three cases, the error distribution of the first measurement result may further include error distribution of the angle of the third device relative to the second device, namely, error distribution of the first angle measurement information, and the error distribution of the second measurement result may further include error distribution of the angle of the second device relative to the third device, namely, error distribution of the second angle measurement information.

In an implementation, the error distribution is a mean and a covariance matrix of errors, or is a sampling point and a weight of an error.

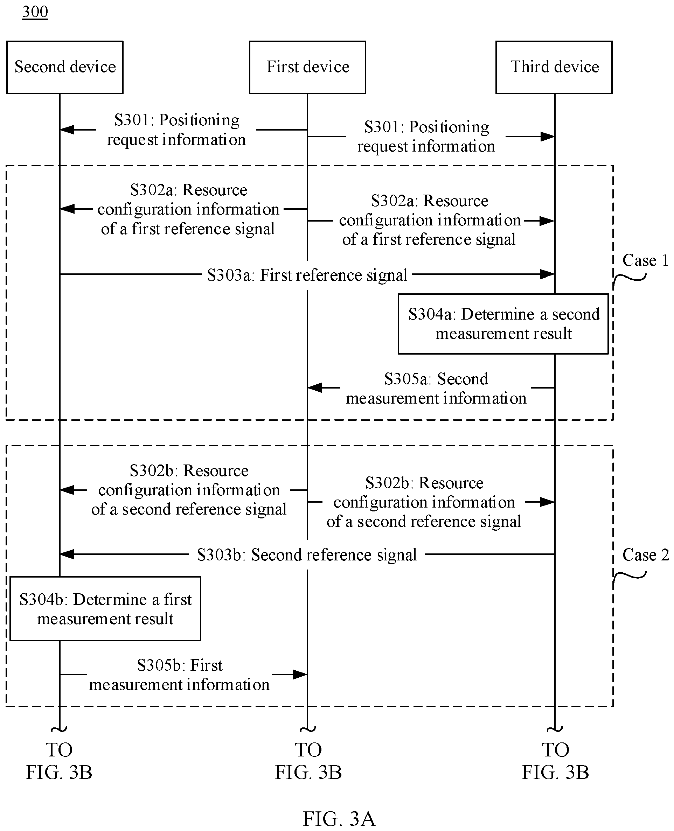

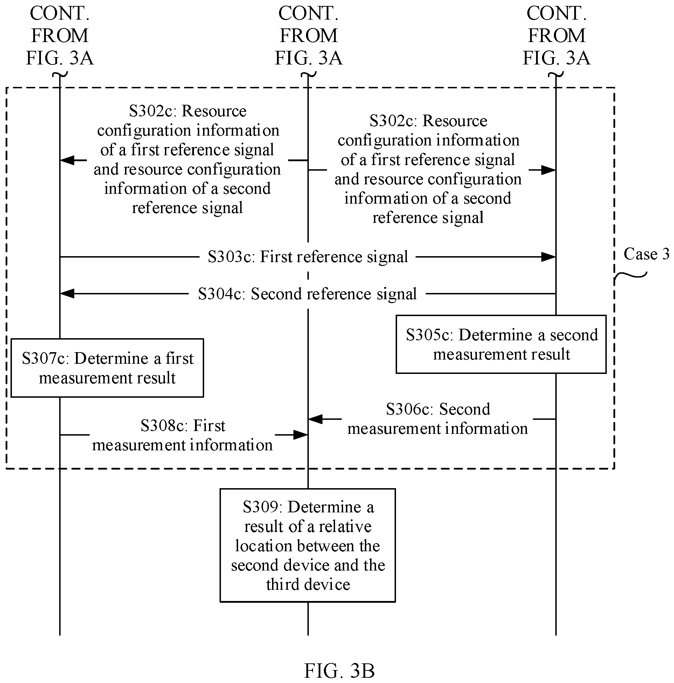

The method 200 is further described below by using a method 300 shown in FIG. 3A and FIG. 3B as an example. FIG. 3A and FIG. 3B are another schematic flowchart of a positioning method according to an embodiment of this application.

S301: A first device separately sends positioning request information to a second device and a third device, and correspondingly, the second device and the third device receive the positioning request information. This step is similar to S210.

The positioning request information sent to the second device and the positioning request information sent to the third device may be the same or different, and may be sent in unicast mode or in broadcast mode. This is not limited in this application.

There are three cases as follows.

### Case 1:

S302a: The first device separately sends resource configuration information of a first reference signal to the second device and the third device, where the resource configuration information of the first reference signal indicates a resource used by the second device to send the first reference signal to the third device.

It should be understood that resource configuration of the first reference signal may be determined by the first device, or may be determined by the second device. When the resource configuration is determined by the first device, in S302a, the first device separately sends the resource configuration information of the first reference signal to the second device and the third device. When the resource configuration is determined by the second device, in S302a, the second device sends the resource configuration information of the first reference signal to the third device. FIG. 3A and FIG. 3B show the former case.

S303a: The second device sends the first reference signal to the third device based on the resource configuration information of the first reference signal, and the third device receives the first reference signal based on the resource configuration information of the first reference signal.

S304a: The third device determines a second measurement result based on the first reference signal.

Specifically, the third device may determine a moment at which the first reference signal is received, and then determine a second time difference based on a moment at which the second device sends the first reference signal and the moment at which the third device receives the first reference signal. That is, the second time difference is a sending-receiving time difference of the first reference signal.

The third device may further determine an angle of the second device relative to the third device based on the first reference signal, that is, obtain second angle measurement information. For example, when the third device has a plurality of antennas, the third device may receive the first reference signal through the plurality of antennas, and determine angle measurement information based on phase distribution of measurement values of the plurality of antennas.

The third device may further determine error distribution of the second time difference and error distribution of the second angle measurement information. A measurement error mainly comes from at least one of the following: an identification deviation caused by a complex channel environment, or a clock error of the device. The error distribution of the second time difference may be obtained based on measurement information of hardware, may be deduced by using some conventional theoretical models, or may be obtained through early training by using a waveform or another feature as an input and by using another method like machine learning or artificial intelligence. This is not limited in this application.

For example, the error distribution may be determined by using a neural network/deep neural network. An input of the network is a received waveform sequence f(t) of the first reference signal, and an output of the network is a variance or a standard deviation of time/angle measurement values. Training of the network may be completed before delivery, and then a trained model is configured in a chip of the third device in advance.

The third device determines the second measurement result. The second measurement result may include second time difference information, error distribution of the second time difference information, the second angle measurement information, and the error distribution of the second angle measurement information. The second time difference information and the second angle measurement information may also be referred to as the second measurement result, and the error distribution of the second time difference information and the error distribution of the second angle measurement information may also be referred to as error distribution of the second measurement result.

S305a: The third device reports second measurement information to the first device.

Optionally, in S304a, the third device may first determine an estimated value of a relative location between the second device and the third device and error distribution of a result of the relative location based on the second measurement result, and in S305a, the determined estimated value of the relative location and the determined error distribution of the result of the relative location are reported to the first device. In this case, a form of the error distribution may be a covariance matrix of location estimation errors, or several sampling points and weights corresponding to location estimation error distribution.

### Case 2:

S302b: The first device separately sends resource configuration information of a second reference signal to the second device and the third device, where the resource configuration information of the second reference signal indicates a resource used by the third device to send the second reference signal to the second device.

It should be understood that resource configuration of the second reference signal may be determined by the first device, or may be determined by the third device. When the resource configuration is determined by the first device, in S302b, the first device separately sends the resource configuration information of the second reference signal to the second device and the third device. When the resource configuration is determined by the third device, in S302b, the third device sends the resource configuration information of the second reference signal to the second device. FIG. 3A and FIG. 3B show the former case.

S303b: The third device sends the second reference signal to the second device based on the resource configuration information of the second reference signal, and the second device receives the second reference signal based on the resource configuration information of the second reference signal.

S304b: The second device determines a first measurement result based on the second reference signal.

Specifically, the second device may determine a moment at which the second reference signal is received, and then determine a first time difference based on a moment at which the third device sends the second reference signal and the moment at which the second device receives the second reference signal. That is, the first time difference is a sending-receiving time difference of the second reference signal.

The second device may further determine an angle of the third device relative to the second device based on the second reference signal, that is, obtain first angle measurement information. For example, when the second device has a plurality of antennas, the second device may receive the second reference signal through the plurality of antennas, and determine angle measurement information based on phase distribution of measurement values of the plurality of antennas.

The second device may further determine error distribution of the first time difference and error distribution of the first angle measurement information. A measurement error mainly comes from at least one of the following: an identification deviation caused by a complex channel environment, or a clock error of the device. The error distribution of the first time difference may be obtained based on measurement information of hardware, may be deduced by using some conventional theoretical models, or may be obtained through early training by using a waveform or another feature as an input and by using another method like machine learning or artificial intelligence. This is not limited in this application.

For example, the error distribution may be determined by using a neural network/deep neural network. An input of the network is a received waveform sequence f(t) of the second reference signal, and an output of the network is a variance or a standard deviation of time/angle measurement values. Training of the network may be completed before delivery, and then a trained model is configured in a chip of the second device in advance.

The second device determines the first measurement result. The first measurement result may include first time difference information, error distribution of the first time difference information, the first angle measurement information, and the error distribution of the first angle measurement information. The first time difference information and the first angle measurement information may also be referred to as the first measurement result, and the error distribution of the first time difference information and the error distribution of the first angle measurement information may also be referred to as error distribution of the first measurement result. It should be understood that, similar to the foregoing description, a time difference included in the first time difference information is time of propagation of the second reference signal from the third device to the second device, and the time difference is multiplied by a speed of light to determine an estimated value of a straight-line distance from the third device to the second device. In addition, error distribution of the estimated distance value may be determined based on error distribution of the time difference.

S305b: The second device reports first measurement information to the first device.

Optionally, in S304b, the second device may first determine an estimated value of a relative location between the second device and the third device and error distribution of a result of the relative location based on the first measurement result, and in S305b, the determined estimated value of the relative location and the determined error distribution of the result of the relative location are reported to the first device. In this case, a form of the error distribution may be a covariance matrix of location estimation errors, or several sampling points and weights corresponding to location estimation error distribution.

### Case 3:

S302c: The first device separately sends resource configuration information of a first reference signal and resource configuration information of a second reference signal to the second device and the third device, where the resource configuration information of the first reference signal indicates a resource used by the second device to send the first reference signal to the third device, and the resource configuration information of the second reference signal indicates a resource used by the third device to send the second reference signal to the second device.

Similarly, resource configuration of the first reference signal may be determined by the first device, or may be determined by the second device, and resource configuration of the second reference signal may be determined by the first device, or may be determined by the third device. When the resource configuration is determined by the first device, in S302c, the first device separately sends the resource configuration information of the first reference signal and the resource configuration information of the second reference signal to the second device and the third device. When the resource configuration is determined by the second device and the third device, in S302c, the second device sends the resource configuration information of the first reference signal to the third device, and the third device sends the resource configuration information of the second reference signal to the second device. FIG. 3A and FIG. 3B show the former case.

S303c: The second device sends the first reference signal to the third device based on the resource configuration information of the first reference signal, and the third device receives the first reference signal based on the resource configuration information of the first reference signal.

S304c: The third device sends the second reference signal to the second device based on the resource configuration information of the second reference signal, and the second device receives the second reference signal based on the resource configuration information of the second reference signal.

S305c: The third device determines a second measurement result based on the first reference signal and the second reference signal.

Specifically, the third device may determine a moment at which the first reference signal is received, and then determine a fourth time difference based on the moment at which the third device receives the first reference signal and a moment at which the third device sends the second reference signal. That is, the fourth time difference is a time interval between the moment at which the first reference signal is received and the moment at which the second reference signal is sent.

The third device may further determine an angle of the second device relative to the third device based on the first reference signal, that is, obtain second angle measurement information. The third device may further determine error distribution of the fourth time difference and error distribution of the second angle measurement information. Details are similar to S304a, and details are not described herein again.

The third device determines the second measurement result. The second measurement result may include fourth time difference information, error distribution of the fourth time difference information, the second angle measurement information, and the error distribution of the second angle measurement information. The fourth time difference information and the second angle measurement information may also be referred to as the second measurement result, and the error distribution of the fourth time difference information and the error distribution of the second angle measurement information may also be referred to as error distribution of the second measurement result.

S306c: The third device reports second measurement information to the first device.

S307c: Similarly, the second device determines a first measurement result based on the first reference signal and the second reference signal.

Specifically, the second device may determine a moment at which the second reference signal is received, and then determine a third time difference based on a moment at which the second device sends the first reference signal and the moment at which the second device receives the second reference signal. That is, the third time difference is a time interval between the moment at which the first reference signal is sent and the moment at which the second reference signal is received.

It should be understood that, when the second device first sends the first reference signal and the third device sends the second reference signal later, the third time difference corresponds to a result obtained by subtracting, from the moment at which the second device receives the second reference signal, the moment at which the second device sends the first reference signal, and the fourth time difference corresponds to a result obtained by subtracting, from the moment at which the third device sends the second reference signal, the moment at which the third device receives the first reference signal. When the third device first sends the second reference signal and the second device sends the first reference signal later, the third time difference corresponds to a result obtained by subtracting, from the moment at which the second device sends the first reference signal, the moment at which the second device receives the second reference signal, and the fourth time difference corresponds to a result obtained by subtracting, from the moment at which the third device receives the first reference signal, the moment at which the third device sends the second reference signal.

The second device may further determine an angle of the third device relative to the second device based on the second reference signal, that is, obtain first angle measurement information. The second device may further determine error distribution of the third time difference and error distribution of the first angle measurement information. Details are similar to S304b, and details are not described herein again.

The second device determines the first measurement result. The first measurement result may include third time difference information, error distribution of the third time difference information, the first angle measurement information, and the error distribution of the first angle measurement information. The third time difference information and the first angle measurement information may also be referred to as the first measurement result, and the error distribution of the third time difference information and the error distribution of the first angle measurement information may also be referred to as error distribution of the first measurement result.

S308c: Similarly, the second device reports first measurement information to the first device.

S309: The first device determines a result of the relative location between the second device and the third device based on the first measurement information and/or the second measurement information.

Specifically, in the case 1, if only the third device reports the second measurement information, the first device determines a relative distance between the second device and the third device based on the second time difference information and the error distribution of the second time difference information, and determines a relative angle between the third device and the second device based on the second angle measurement information and the error distribution of the second angle measurement information. It should be understood that a second time difference is time of propagation of the first reference signal from the second device to the third device, and the second time difference is multiplied by a speed of light to determine an estimated value of a straight-line distance from the second device to the third device. In addition, error distribution of the estimated distance value may be determined based on error distribution of the time difference. In the case 2, if only the second device reports the first measurement information, the first device determines a relative distance between the second device and the third device based on the first time difference information and the error distribution of the first time difference information, and determines a relative angle between the third device and the second device based on the first angle measurement information and the error distribution of the first angle measurement information. It should be understood that a first time difference is time of propagation of the second reference signal from the third device to the second device, and the first time difference is multiplied by a speed of light to determine an estimated value of a straight-line distance from the third device to the second device. In addition, error distribution of the estimated distance value may be determined based on error distribution of the time difference. That is, in the case 1 and the case 2, when the second device and the third device are completely synchronized, the relative distance between the second device and the third device can be calculated based on the time of propagation of the first reference signal or the time of propagation of the second reference signal.

In the case 3, if the third device reports the second measurement information and the second device reports the first measurement information, the first device determines a relative distance between the second device and the third device based on the fourth time difference information, the error distribution of the fourth time difference information, the third time difference information, and the error distribution of the third time difference information, and determines a relative angle between the third device and the second device based on the second angle measurement information, the error distribution of the second angle measurement information, the first angle measurement information, and the error distribution of the first angle measurement information. It should be understood that, when the second device first sends the first reference signal and the third device sends the second reference signal later, the fourth time difference is subtracted from the third time difference, to obtain a sum of the time of propagation of the first reference signal from the second device to the third device and the time of propagation of the second reference signal from the third device to the second device. When the third device first sends the second reference signal and the second device sends the first reference signal later, the third time difference is subtracted from the fourth time difference, to obtain a sum of the time of propagation of the first reference signal from the second device to the third device and the time of propagation of the second reference signal from the third device to the second device. Because round-trip time is equal, one-way propagation time of the signal can be obtained, and the one-way propagation time is multiplied by the speed of light to determine the estimated value of the straight-line distance from the third device to the second device. In addition, the error distribution of the estimated distance value may be determined based on the error distribution of the time difference. That is, in the case 3, when the second device and the third device are not completely synchronized, the relative distance between the second device and the third device can be calculated based on a difference between the round-trip time (round-trip time, RTT) of the first reference signal and the second reference signal.

It should be understood that in S306c, the third device may also report the second measurement information to the second device. The second device determines the result of the relative location between the second device and the third device and the error distribution of the result of the relative location based on the first measurement information determined by the second device and the received second measurement information. Then, in S308c, the determined result of the relative location and the determined error distribution of the result of the relative location are reported to the first device. Similarly, in S308c, the second device may also report the first measurement information to the third device. The third device determines the result of the relative location between the second device and the third device and the error distribution of the result of the relative location based on the second measurement information determined by the third device and the received first measurement information. Then, in S306c, the determined result of the relative location and the determined error distribution of the result of the relative location are reported to the first device.

Based on the foregoing technical solution, during relative positioning, the first measurement information reported by the second device and/or the second measurement information reported by the third device each include/includes the error distribution, to obtain a more accurate positioning result.

In an implementation, in the method 200 and the method 300, the first device may be the primary device 110 in the system 100, and the second device and the third device are respectively the target device 120 and the cooperation device 130 in the system 100. According to the method 200 or the method 300, the primary device 110 may obtain a more accurate relative location between the target device 120 and the cooperation device 130.

In an implementation, in the method 200 and the method 300, the first device may be the positioning device 140 in the system 100, and the second device and the third device are respectively any two of the primary device 110, the target device 120, and the cooperation device 130 in the system 100. According to the method 200 or the method 300, the positioning device 140 may obtain a more accurate relative location between any two of the primary device 110, the target device 120, and the cooperation device 130.

In an implementation, in the method 200 and the method 300, the first device and the second device may be a same device, for example, the first device and the second device each are the primary device 110 or the positioning device 140 in the system 100, and the third device is the target device 120 or the cooperation device 130 in the system 100. According to the method 200 or the method 300, the primary device 110 or the positioning device 140 may obtain a more accurate relative location between the primary device 110 or the positioning device 140 and the target device 120 or the cooperation device 130. It should be understood that, in this case, information exchange between the first device and the second device in the method 200 and the method 300 is internal processing of the primary device or the positioning device, and air interface information transmission is not involved. For example, in S302a, the first device does not send the resource configuration information of the first reference signal to the second device, in other words, the first device does not configure a reference signal resource for the second device.

In an implementation, in the method 200 and the method 300, the first device and the third device may be a same device, for example, the first device and the third device each are the primary device 110 or the positioning device 140 in the system 100, and the second device is the target device 120 or the cooperation device 130 in the system 100. According to the method 200 or the method 300, the primary device 110 or the positioning device 140 may obtain a more accurate relative location between the primary device 110 or the positioning device 140 and the target device 120 or the cooperation device 130. It should be understood that, in this case, information exchange between the first device and the third device in the method 200 and the method 300 is internal processing of the primary device or the positioning device, and air interface information transmission is not involved.

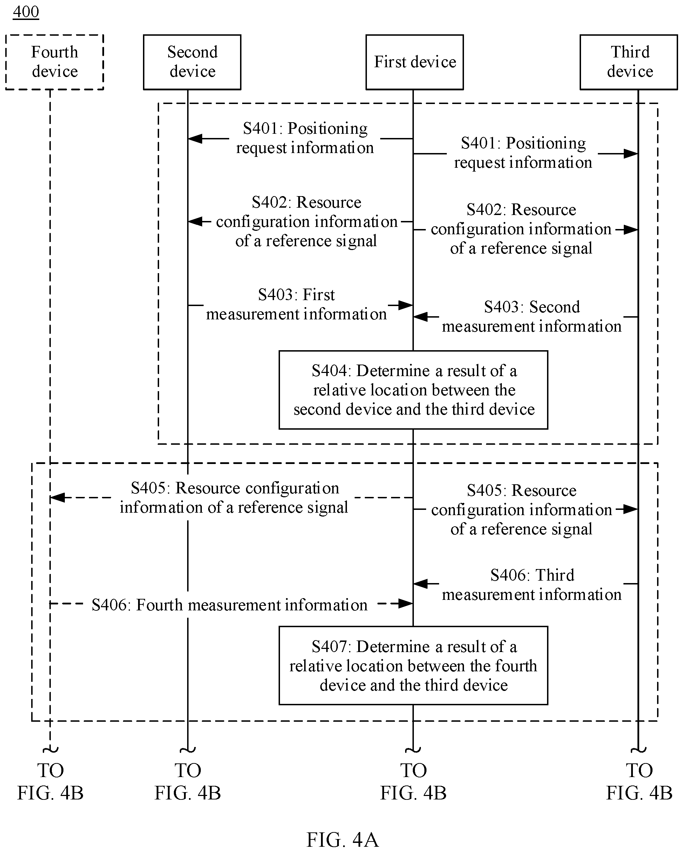

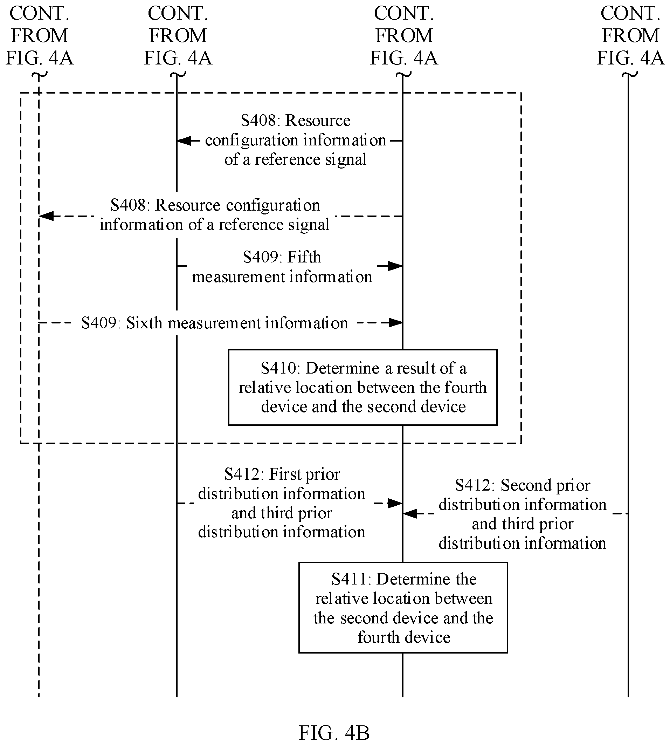

FIG. 4A and FIG. 4B are another schematic flowchart of a positioning method according to an embodiment of this application. According to the method 400 shown in FIG. 4A and FIG. 4B, a relative location between a second device and a fourth device and a relative location between a third device and the fourth device are further obtained based on FIG. 2 or FIG. 3A and FIG. 3B.

S401 to S404 are similar to S210 to S240. For a specific implementation process thereof, refer to the method 300. Details are not described herein again. Between S402 and S403, the method further includes: The second device sends a first reference signal to the third device based on resource configuration information of the first reference signal, and the third device receives the first reference signal based on the resource configuration information of the first reference signal; and/or the third device sends a second reference signal to the second device based on resource configuration information of the second reference signal, and the second device receives the second reference signal based on the resource configuration information of the second reference signal. In S404, when determining a result of a relative location between the second device and the third device, a first device may further obtain error distribution of the result of the relative location. In this case, a form of the error distribution may be a covariance matrix of location estimation errors, or several sampling points and weights corresponding to location estimation error distribution.

S405: The first device sends resource configuration information of a seventh reference signal and/or resource configuration information of an eighth reference signal to the third device and the fourth device, where the resource configuration information of the seventh reference signal indicates a resource used by the third device to send the seventh reference signal to the fourth device, and the resource configuration information of the eighth reference signal indicates a resource used by the fourth device to send the eighth reference signal to the third device.

Similar to the method 300, resource configuration of the seventh reference signal may be determined by the first device, or may be determined by the third device. When the resource configuration is determined by the first device, in S405, the first device separately sends the resource configuration information of the seventh reference signal to the third device and the fourth device. When the resource configuration is determined by the third device, in S405, the third device sends the resource configuration information of the seventh reference signal to the fourth device. FIG. 4A and FIG. 4B show the former case.

Similarly, resource configuration of the eighth reference signal may be determined by the first device, or may be determined by the fourth device. When the resource configuration is determined by the first device, in S405, the first device separately sends the resource configuration information of the eighth reference signal to the third device and the fourth device. When the resource configuration is determined by the fourth device, in S405, the fourth device sends the resource configuration information of the eighth reference signal to the third device. FIG. 4A and FIG. 4B show the former case.

S406: The first device receives third measurement information from the third device and/or fourth measurement information from the fourth device, where the third measurement information is used to determine the relative location between the third device and the fourth device, the third measurement information includes a third measurement result and error distribution of the third measurement result, the fourth measurement information is used to determine the relative location between the third device and the fourth device, the fourth measurement information includes a fourth measurement result and error distribution of the fourth measurement result, the third measurement information is determined based on the eighth reference signal, and the fourth measurement information is determined based on the seventh reference signal.

It should be understood that, similar to S220, S406 also includes three cases.

Case 1: That the first device receives the third measurement information from the third device and/or the fourth measurement information from the fourth device includes: The first device receives the third measurement information from the third device, where the third measurement result includes fifth time difference information, and the fifth time difference information indicates a time difference between a moment at which the fourth device sends the eighth reference signal and a moment at which the third device receives the eighth reference signal. It should be understood that the eighth reference signal is a reference signal sent by the fourth device to the third device.

Case 2: That the first device receives the third measurement information from the third device and/or the fourth measurement information from the fourth device includes: The first device receives the fourth measurement information from the fourth device, where the fourth measurement result includes sixth time difference information, and the sixth time difference information indicates a time difference between a moment at which the third device sends the seventh reference signal and a moment at which the fourth device receives the seventh reference signal. It should be understood that the seventh reference signal is a reference signal sent by the third device to fourth second device.

Case 3: That the first device receives the third measurement information from the third device and/or the fourth measurement information from the fourth device includes: The first device receives the third measurement information from the third device and the fourth measurement information from the fourth device, where the third measurement result includes seventh time difference information, the fourth measurement result includes eighth time difference information, the seventh time difference information indicates a time difference between a moment at which the third device sends the seventh reference signal and a moment at which the third device receives the eighth reference signal, and the eighth time difference information indicates a time difference between a moment at which the fourth device receives the seventh reference signal and a moment at which the fourth device sends the eighth reference signal.

Similarly, in any one of the foregoing three cases, the third measurement result may further include third angle measurement information, the fourth measurement result may include fourth angle measurement information, the third angle measurement information is determined based on the eighth reference signal, the third angle measurement information indicates an angle of the fourth device relative to the third device, the fourth angle measurement information is determined based on the seventh reference signal, and the fourth angle measurement information indicates an angle of the third device relative to the fourth device.

Similarly, in any one of the foregoing three cases, the third measurement information may further include the error distribution of the third measurement result. Specifically, the error distribution of the third measurement result may include error distribution of the fifth time difference information or the seventh time difference information, and error distribution of the angle of the fourth device relative to the third device, namely, error distribution of the third angle measurement information. The error distribution of the fourth measurement result may include error distribution of the sixth time difference information or the eighth time difference information, and error distribution of the angle of the third device relative to the fourth device, namely, error distribution of the fourth angle measurement information.

In an implementation, the error distribution is a mean and a covariance matrix of errors, or is a sampling point and a weight of an error.

S407: The first device determines a result of the relative location between the fourth device and the third device based on the third measurement information and/or the fourth measurement information.

Specifically, in the case 1, if only the third device reports the third measurement information, the first device determines a relative distance between the fourth device and the third device based on the fifth time difference information and the error distribution of the fifth time difference information, and determines a relative angle between the third device and the fourth device based on the third angle measurement information and the error distribution of the third angle measurement information. It should be understood that a fifth time difference is time of propagation of the eighth reference signal from the fourth device to the third device, and the fifth time difference is multiplied by a speed of light to determine an estimated value of a straight-line distance from the third device to the fourth device. In addition, error distribution of the estimated distance value may be determined based on error distribution of the time difference. In the case 2, if only the fourth device reports the fourth measurement information, the first device determines a relative distance between the fourth device and the third device based on the sixth time difference information and the error distribution of the sixth time difference information, and determines a relative angle between the third device and the fourth device based on the fourth angle measurement information and the error distribution of the fourth angle measurement information. It should be understood that a sixth time difference is time of propagation of the seventh reference signal from the third device to the fourth device, and the sixth time difference is multiplied by a speed of light to determine an estimated value of a straight-line distance from the third device to the fourth device. In addition, error distribution of the estimated distance value may be determined based on error distribution of the time difference. That is, in the case 1 and the case 2, when the fourth device and the third device are completely synchronized, the relative distance between the fourth device and the third device can be calculated based on the time of propagation of the seventh reference signal or the time of propagation of the eighth reference signal.

In the case 3, if the third device reports the third measurement information and the fourth device reports the fourth measurement information, the first device determines a relative distance between the fourth device and the third device based on the eighth time difference information, the error distribution of the eighth time difference information, the seventh time difference information, and the error distribution of the seventh time difference information, and determines a relative angle between the third device and the fourth device based on the fourth angle measurement information, the error distribution of the fourth angle measurement information, the third angle measurement information, and the error distribution of the third angle measurement information. It should be understood that, when the third device first sends the seventh reference signal and the fourth device sends the eighth reference signal later, an eighth time difference is subtracted from a seventh time difference, to obtain a sum of the time of propagation of the seventh reference signal from the third device to the fourth device and the time of propagation of the eighth reference signal from the fourth device to the third device. When the fourth device first sends the eighth reference signal and the third device sends the seventh reference signal later, a seventh time difference is subtracted from an eighth time difference, to obtain a sum of the time of propagation of the seventh reference signal from the third device to the fourth device and the time of propagation of the eighth reference signal from the fourth device to the third device. Because round-trip time is equal, one-way propagation time of the signal can be obtained, and the one-way propagation time is multiplied by a speed of light to determine an estimated value of a straight-line distance from the third device to the fourth device. In addition, error distribution of the estimated distance value may be determined based on error distribution of the time difference. That is, in the case 3, when the fourth device and the third device are not completely synchronized, the relative distance between the fourth device and the third device can be calculated based on a difference of the round-trip time between the seventh reference signal and the eighth reference signal.

It should be understood that, in S406, the fourth device may also report the fourth measurement information to the third device. The third device determines the result of the relative location between the fourth device and the third device and error distribution of the result of the relative location based on the third measurement information determined by the third device and the received fourth measurement information. Then an estimated value of the determined relative location and the determined error distribution of the result of the relative location are reported to the first device. Similarly, the third device may also report the third measurement information to the fourth device. The fourth device determines the result of the relative location between the fourth device and the third device and error distribution of the result of the relative location based on the fourth measurement information determined by the fourth device and the received third measurement information. Then an estimated value of the determined relative location and the determined error distribution of the result of the relative location are reported to the first device.

In S406 and S407, when the result of the relative location between the fourth device and the third device is determined, the error distribution of the result of the relative location may be further obtained. In this case, a form of the error distribution may be a covariance matrix of location estimation errors, or several sampling points and weights corresponding to location estimation error distribution.

It should be understood that, for specific implementations of S405 to S407, refer to the foregoing method 300. Details are not described herein again. Between S405 and S406, the method further includes: The third device sends the seventh reference signal to the fourth device based on the resource configuration information of the seventh reference signal, and the fourth device receives the seventh reference signal based on the resource configuration information of the seventh reference signal; and/or the fourth device sends the eighth reference signal to the third device based on the resource configuration information of the eighth reference signal, and the third device receives the eighth reference signal based on the resource configuration information of the eighth reference signal.

S408: The first device sends resource configuration information of a ninth reference signal and/or resource configuration information of a tenth reference signal to the second device and the fourth device, where the resource configuration information of the ninth reference signal indicates a resource used by the second device to send the ninth reference signal to the fourth device, and the resource configuration information of the tenth reference signal indicates a resource used by the fourth device to send the tenth reference signal to the second device.

Similar to the method 300, resource configuration of the ninth reference signal may be determined by the first device, or may be determined by the second device. When the resource configuration is determined by the first device, in S408, the first device separately sends the resource configuration information of the ninth reference signal to the second device and the fourth device. When the resource configuration is determined by the second device, in S408, the second device sends the resource configuration information of the ninth reference signal to the fourth device. FIG. 4A and FIG. 4B show the former case.

Similarly, resource configuration of the tenth reference signal may be determined by the first device, or may be determined by the fourth device. When the resource configuration is determined by the first device, in S408, the first device separately sends the resource configuration information of the tenth reference signal to the second device and the fourth device. When the resource configuration is determined by the fourth device, in S408, the fourth device sends the resource configuration information of the tenth reference signal to the second device. FIG. 4A and FIG. 4B show the former case.

S409: The first device receives fifth measurement information from the second device and/or sixth measurement information from the fourth device, where the fifth measurement information is used to determine a relative location between the second device and the fourth device, the fifth measurement information includes a fifth measurement result and error distribution of the fifth measurement result, the sixth measurement information is used to determine the relative location between the second device and the fourth device, the sixth measurement information includes a sixth measurement result and error distribution of the sixth measurement result, the fifth measurement information is determined based on the tenth reference signal, and the sixth measurement information is determined based on the ninth reference signal.

It should be understood that, similar to S220, S409 also includes three cases.

Case 1: That the first device receives the fifth measurement information from the second device and/or the sixth measurement information from the fourth device includes: The first device receives the fifth measurement information from the second device, where the fifth measurement result includes ninth time difference information, and the ninth time difference information indicates a time difference between a moment at which the fourth device sends the tenth reference signal and a moment at which the second device receives the tenth reference signal. It should be understood that the tenth reference signal is a reference signal sent by the fourth device to the second device.

Case 2: That the first device receives the fifth measurement information from the second device and/or the sixth measurement information from the fourth device includes: The first device receives the sixth measurement information from the fourth device, where the sixth measurement result includes tenth time difference information, and the tenth time difference information indicates a time difference between a moment at which the second device sends the ninth reference signal and a moment at which the fourth device receives the ninth reference signal. It should be understood that the eleventh reference signal is a reference signal sent by the second device to the fourth device.

Case 3: That the first device receives the fifth measurement information from the second device and/or the sixth measurement information from the fourth device includes: The first device receives the fifth measurement information from the second device and the sixth measurement information from the fourth device, where the fifth measurement result includes eleventh time difference information, the sixth measurement result includes twelfth time difference information, the eleventh time difference information indicates a time difference between a moment at which the second device sends the ninth reference signal and a moment at which the second device receives the tenth reference signal, and the twelfth time difference information indicates a time difference between a moment at which the fourth device receives the ninth reference signal and a moment at which the fourth device sends the tenth reference signal.

Similarly, in any one of the foregoing three cases, the fifth measurement result may further include fifth angle measurement information, the sixth measurement result may further include sixth angle measurement information, the fifth angle measurement information is determined based on the tenth reference signal, the fifth angle measurement information indicates an angle of the fourth device relative to the second device, the sixth angle measurement information is determined based on the ninth reference signal, and the sixth angle measurement information indicates an angle of the second device relative to the fourth device.

Similarly, in any one of the foregoing three cases, the fifth measurement information may further include the error distribution of the fifth measurement result. Specifically, the error distribution of the fifth measurement result may include error distribution of the ninth time difference information or the eleventh time difference information, and error distribution of the angle of the fourth device relative to the second device, namely, error distribution of the fifth angle measurement information. The error distribution of the sixth measurement result may include error distribution of the tenth time difference information or the twelfth time difference information, and error distribution of the angle of the second device relative to the fourth device, namely, error distribution of the sixth angle measurement result.

In an implementation, the error distribution is a mean and a covariance matrix of errors, or is a sampling point and a weight of an error.

It should be understood that, for specific implementations of S407 to S409, refer to the foregoing method 300. Details are not described herein again. Between S408 and S409, the method further includes: The second device sends the ninth reference signal to the fourth device based on the resource configuration information of the ninth reference signal, and the fourth device receives the ninth reference signal based on the resource configuration information of the ninth reference signal; and/or the fourth device sends the tenth reference signal to the second device based on the resource configuration information of the tenth reference signal, and the second device receives the tenth reference signal based on the resource configuration information of the tenth reference signal.

S410: The first device determines a result of the relative location between the fourth device and the second device based on the fifth measurement information and/or the sixth measurement information.

Specifically, in the case 1, if only the second device reports the fifth measurement information, the first device determines a relative distance between the fourth device and the second device based on the ninth time difference information and the error distribution of the ninth time difference information, and determines a relative angle between the second device and the fourth device based on the fifth angle measurement information and the error distribution of the fifth angle measurement information. It should be understood that a ninth time difference is time of propagation of the tenth reference signal from the fourth device to the second device, and the ninth time difference is multiplied by the speed of light to determine an estimated value of a straight-line distance from the second device to the fourth device. In addition, error distribution of the estimated distance value may be determined based on error distribution of the time difference. In the case 2, if only the fourth device reports the sixth measurement information, the first device determines a relative distance between the fourth device and the second device based on the tenth time difference information and the error distribution of the tenth time difference information, and determines a relative angle between the second device and the fourth device based on the sixth angle measurement information and the error distribution of the sixth angle measurement information. It should be understood that a tenth time difference is time of propagation of the ninth reference signal from the second device to the fourth device, and the tenth time difference is multiplied by the speed of light to determine an estimated value of a straight-line distance from the second device to the fourth device. In addition, error distribution of the estimated distance value may be determined based on error distribution of the time difference. That is, in the case 1 and the case 2, when the fourth device and the second device are completely synchronized, the relative distance between the fourth device and the second device can be calculated based on the time of propagation of the ninth reference signal or the time of propagation of the tenth reference signal.

In the case 3, if the second device reports the fifth measurement information and the fourth device reports the sixth measurement information, the first device determines a relative distance between the fourth device and the second device based on the twelfth time difference information, the error distribution of the twelfth time difference information, the eleventh time difference information, and the error distribution of the eleventh time difference information, and determines a relative angle between the second device and the fourth device based on the sixth angle measurement information, the error distribution of the sixth angle measurement information, the fifth angle measurement information, and the error distribution of the fifth angle measurement information. It should be understood that, when the second device first sends the ninth reference signal and the fourth device sends the tenth reference signal later, a twelfth time difference is subtracted from an eleventh time difference, to obtain a sum of the time of propagation of the ninth reference signal from the second device to the fourth device and the time of propagation of the tenth reference signal from the fourth device to the second device. When the fourth device first sends the tenth reference signal and the second device sends the ninth reference signal later, an eleventh time difference is subtracted from a twelfth time difference, to obtain a sum of the time of propagation of the ninth reference signal from the second device to the fourth device and the time of propagation of the tenth reference signal from the fourth device to the second device. Because round-trip time is equal, one-way propagation time of the signal can be obtained, and the one-way propagation time is multiplied by the speed of light to determine the estimated value of the straight-line distance from the second device to the fourth device. In addition, the error distribution of the estimated distance value may be determined based on the error distribution of the time difference. That is, in the case 3, when the fourth device and the second device are not completely synchronized, the relative distance between the fourth device and the second device can be calculated based on a difference of the round-trip time between the ninth reference signal and the tenth reference signal.

It should be understood that, in S409, the fourth device may also report the sixth measurement information to the second device. The second device determines the result of the relative location between the fourth device and the second device and error distribution of the result of the relative location based on the fifth measurement information determined by the second device and the received sixth measurement information. Then an estimated value of the determined relative location and the determined error distribution of the result of the relative location are reported to the first device. Similarly, the second device may also report the fifth measurement information to the fourth device. The fourth device determines the result of the relative location between the fourth device and the second device and error distribution of the result of the relative location based on the sixth measurement information determined by the fourth device and the received fifth measurement information. Then an estimated value of the determined relative location and the determined error distribution of the result of the relative location are reported to the first device.

In S409 and S410, when the result of the relative location between the fourth device and the second device is determined, the error distribution of the result of the relative location may be further obtained. In this case, a form of the error distribution may be a covariance matrix of location estimation errors, or several sampling points and weights corresponding to location estimation error distribution.

S411: The first device determines the relative location between the second device and the fourth device based on at least one of the first measurement information, the second measurement information, the third measurement information, the fourth measurement information, the fifth measurement information, or the sixth measurement information.

In other words, the first device may converge one or more of measurement information between the second device and the third device, between the third device and the fourth device, and between the second device and the fourth device, error distribution of the measurement information, and the like, to obtain the relative location between the second device and the fourth device.

For example, the first device assumes that distribution of relative locations between devices complies with Gaussian distribution, then determines a parameter of the Gaussian distribution based on the measurement results and the error distribution that are reported by all devices, and finally performs minimum mean square error (minimum mean square error, MMSE) estimation on the relative location between the second device and the fourth device through a plurality of pieces of Gaussian distribution. This improves positioning accuracy.

Optionally, S412: The first device receives at least one of first prior distribution information, second prior distribution information, or third prior distribution information, where the first prior distribution information is from the second device, the second prior distribution information is from the third device, the third prior distribution information is from the second device or the third device, the first prior distribution information indicates prior distribution of the relative location between the second device and the fourth device, the second prior distribution information indicates prior distribution of the relative location between the third device and the fourth device, and the third prior distribution information indicates prior distribution of the relative location between the second device and the third device.

In other words, the second device reports prior distribution information of a location of the second device relative to the fourth device and prior distribution information of a location of the second device relative to the third device to the first device, and the third device reports prior distribution information of a location of the third device relative to the fourth device and prior distribution information of a location of the third device relative to the second device to the first device. For example, a form of the prior distribution may be a mean and a covariance matrix of errors of two-dimensional location coordinates or three-dimensional location coordinates, or a form of the prior distribution is a sampling point and a weight of an error of two-dimensional location coordinates or three-dimensional location coordinates.

In an implementation, the prior distribution may be obtained by the second device or the third device based on a historical measurement result and by using a sensor like an internal gyroscope.

If the step S410 is performed, in S409, the first device may alternatively determine the relative location between the second device and the fourth device based on at least one of the first measurement information, the second measurement information, the third measurement information, the fourth measurement information, the fifth measurement information, or the sixth measurement information, and at least one of the first prior distribution information, the second prior distribution information, or the third prior distribution information.

In other words, the first device may converge one or more of the measurement information between the second device and the third device, between the third device and the fourth device, and between the second device and the fourth device, the error distribution of the measurement information, the prior distribution information, and the like, to obtain the relative location between the second device and the fourth device.

In an implementation, the first device is a positioning device, the second device is a target device, the third device is a cooperation device, and the fourth device is a primary device. In other words, the positioning device may converge measurement information between the target device and the cooperation device, between the cooperation device and the primary device, and between the target device and the primary device, and error distribution of the measurement information, to obtain a relative location between the target device and the primary device.

In an implementation, the first device and the fourth device are a same device. To be specific, the first device and the fourth device each are a primary device, the second device is a target device, and the third device is a cooperation device. In other words, the primary device may converge measurement information between the target device and the cooperation device, between the cooperation device and the primary device, and between the target device and the primary device, and error distribution of the measurement information, to obtain a relative location between the target device and the primary device. It should be understood that, in this case, information exchange between the first device and the fourth device in the method 400 is internal processing of the primary device, and air interface information transmission is not involved. For example, in S405, the first device does not send the resource configuration information of the seventh reference signal and/or the resource configuration information of the eighth reference signal to the fourth device. In S407, the first device does not send the resource configuration information of the ninth reference signal and/or the resource configuration information of the tenth reference signal to the fourth device. In other words, the first device does not configure a reference signal resource for the fourth device.

Therefore, in this embodiment of this application, the relative location between the target device and the primary device can be obtained by combining a plurality of types of information such as the measurement information between the target device and the cooperation device, between the cooperation device and the primary device, and between the target device and the primary device, and the error distribution of the measurement information, to obtain a more accurate positioning result. Especially, when the primary device or the positioning device initiates relative positioning between the primary device and the target device, if a condition of a channel between the primary device and the target device is not extremely good, joint location estimation, namely, information convergence, may be performed with assistance of the cooperation device based on the reported error distribution of the measurement information, to obtain a more accurate positioning result between the primary device and the target device.

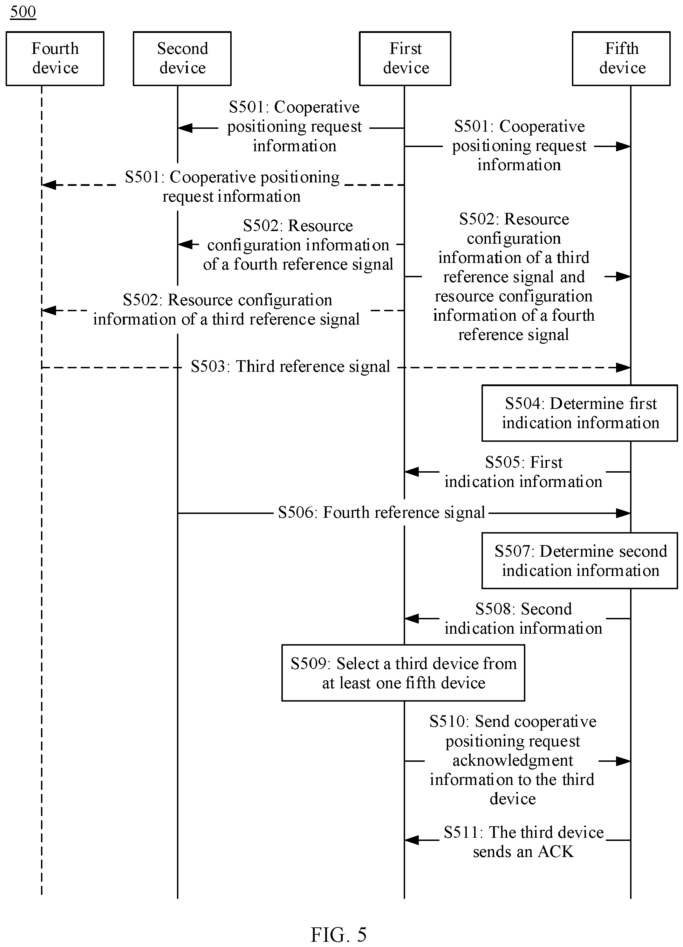

FIG. 5 is another schematic flowchart of a positioning method according to an embodiment of this application. The method 500 shown in FIG. 5 may be used to select the foregoing third device from at least one fifth device, and the third device is configured to assist in relative positioning between a second device and a fourth device.

S501: A first device separately sends cooperative positioning request information (cooperative positioning request information) to the second device, the fourth device, and the at least one fifth device.

The first device may send the cooperative positioning request information in unicast mode or broadcast mode.

Optionally, the cooperative positioning request information sent to the second device, the fourth device, and the at least one fifth device may be the same or may be different. This is not limited in this application.

S502: The first device sends resource configuration information of a third reference signal to the fourth device and the at least one fifth device, and sends resource configuration information of a fourth reference signal to the second device and the at least one fifth device, where the resource configuration information of the third reference signal indicates a resource used by the fourth device to send the third reference signal to the at least one fifth device, the resource configuration information of the fourth reference signal indicates a resource used by the second device to send the fourth reference signal to the at least one fifth device, and the at least one fifth device includes the third device.

Similar to the method 300, resource configuration of the third reference signal may be determined by the first device, or may be determined by the fourth device. When the resource configuration is determined by the first device, in S502, the first device separately sends the resource configuration information of the third reference signal to the fourth device and the at least one fifth device. When the resource configuration is determined by the fourth device, in S502, the fourth device sends the resource configuration information of the fourth reference signal to the at least one fifth device. FIG. 5 shows the former case.

Similarly, resource configuration of the fourth reference signal may be determined by the first device, or may be determined by the second device. When the resource configuration is determined by the first device, in S502, the first device separately sends the resource configuration information of the fourth reference signal to the second device and the at least one fifth device. When the resource configuration is determined by the second device, in S502, the second device sends the resource configuration information of the fourth reference signal to the at least one fifth device. FIG. 5 shows the former case.

S503: The fourth device sends the third reference signal to the at least one fifth device based on the resource configuration information of the third reference signal, and the at least one fifth device receives the third reference signal based on the resource configuration information of the third reference signal.

S504: The at least one fifth device determines first indication information based on the third reference signal, where the first indication information indicates positioning accuracy between the at least one fifth device and the fourth device and/or indicates whether a first channel between the at least one fifth device and the fourth device is a line-of-sight (line-of-sight, LoS) propagation channel.

Any one of the at least one fifth device may measure the third reference signal, and determine positioning accuracy between the one of the at least one fifth device and the fourth device. Specifically, the positioning accuracy may be represented by a percentage. Alternatively, any one of the at least one fifth device may measure the third reference signal, and determine whether a transmission channel (namely, the first channel) between the one of the at least one fifth device and the fourth device is a LoS propagation channel or a non-line-of-sight (non-line-of-sight, NLoS) propagation channel.

For example, any one of the at least one fifth device may use a received waveform of the third reference signal as an input, and the positioning accuracy or an indication of a LoS/an NLoS as an output according to a machine learning algorithm or an artificial intelligence (artificial intelligence, AI) algorithm, to obtain the first indication information.

Optionally, any one of the at least one fifth device may further measure a reference signal received power (reference signal received power, RSRP) of the third reference signal.

S505: The at least one fifth device sends the first indication information to the first device.

Optionally, when the RSRP is measured, the RSRP may be further reported.

Optionally, information reported by the at least one fifth device may further include a device identifier (identifier, ID) of the at least one fifth device.

S506: Similar to S503, the second device sends the fourth reference signal to the at least one fifth device based on the resource configuration information of the fourth reference signal, and the at least one fifth device receives the fourth reference signal based on the resource configuration information of the fourth reference signal.

S507: Similar to S504, the at least one fifth device determines second indication information based on the fourth reference signal, where the second indication information indicates positioning accuracy between the at least one fifth device and the second device and/or indicates whether a second channel between the at least one fifth device and the second device is a LoS propagation channel.

Any one of the at least one fifth device may measure the fourth reference signal, and determine positioning accuracy between the one of the at least one fifth device and the second device. Specifically, the positioning accuracy may be represented by a percentage. Alternatively, any one of the at least one fifth device may measure the fourth reference signal, and determine whether a transmission channel (namely, the second channel) between the one of the at least one fifth device and the second device is a LoS propagation channel or an NLoS propagation channel.

For example, any one of the at least one fifth device may use a received waveform of the fourth reference signal as an input, and the positioning accuracy or an indication of a LoS/an NLoS as an output according to a machine learning algorithm or an AI algorithm, to obtain the second indication information.

Optionally, any one of the at least one fifth device may further measure an RSRP of the fourth reference signal.

S508: Similar to S505, the at least one fifth device sends the second indication information to the first device.

Optionally, when the RSRP is measured, the RSRP may be further reported.

Optionally, information reported by the at least one fifth device may further include a device ID of the at least one fifth device.

S509: The first device selects the third device from the at least one fifth device based on the first indication information and the second indication information.

The first device may select one or more fifth devices with high positioning accuracy as the third device based on the first indication information and the second indication information, for example, select a device whose positioning accuracy in the first indication information is greater than a first threshold and whose positioning accuracy in the second indication information is greater than a second threshold is selected.

The first device may select, based on the first indication information and the second indication information, one or more fifth devices whose first channel and second channel both are a LoS as the third devices.

Optionally, if the RSRP is reported, the first device may further select a device with a large RSRP as the third device, for example, select a device whose RSPP is greater than a third threshold.

S510: The first device sends cooperative positioning request acknowledgment information to the determined third device.

S511: The third device replies an acknowledgment (acknowledgment, ACK) to the first device, to indicate acknowledgment of performing a cooperative positioning service.

In an implementation, the first device is a positioning device, the second device is a target device, the third device is a cooperation device, and the fourth device is a primary device. In other words, during relative positioning, the positioning device selects one or more devices from the fifth device as cooperation devices according to the method 500 in FIG. 5.

In an implementation, the first device and the fourth device are a same device. To be specific, the first device and the fourth device each are a primary device, the second device is a target device, and the third device is a cooperation device. In other words, the primary device may select one or more devices from the fifth device as cooperation devices according to the method 500 in FIG. 5. It should be understood that, in this case, information exchange between the first device and the fourth device in the method 500 is internal processing of the primary device, and air interface information transmission is not involved.

In an implementation, after the cooperation device is determined according to the method 500, a relative location between the cooperation device and another device may be further obtained according to the method 200 or the method 300, and then measurement information between the target device and the cooperation device, between the cooperation device and the primary device, and between the target device and the primary device, and error distribution of the measurement information are converged according to the method 400, to obtain a relative location between the target device and the primary device.

Therefore, in this embodiment of this application, the first indication information and the second indication information are reported, so that the first device can select the foregoing third device from the at least one fifth device, and then initiate cooperative positioning with the third device. In other words, a device with good cooperative positioning performance may be selected as the cooperation device, to obtain a more accurate positioning result.

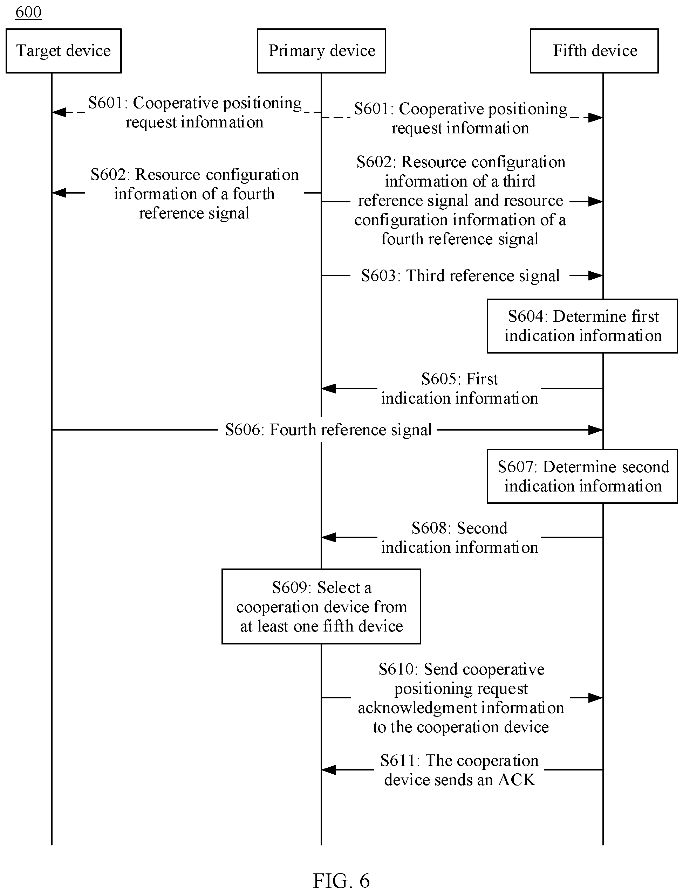

FIG. 6 is used as an example to describe a case in which the first device and the fourth device are the same device in the method 500. In this case, information exchange between the first device and the fourth device in the method 500 is internal processing of the primary device, and air interface information transmission is not involved. FIG. 6 is another schematic flowchart of a positioning method according to an embodiment of this application. In the method 600 shown in FIG. 6, in the method 500, the first device and the fourth device each are the primary device, the second device is the target device, and the third device is the cooperation device.

It should be understood that a sequence of sending the third reference signal and the fourth reference signal is not limited in this application.

S601: A primary device separately sends cooperative positioning request information (cooperative positioning request information) to a target device and at least one fifth device.

Optionally, the cooperative positioning request information sent to the target device and the at least one fifth device may be the same or may be different, and may be unicast or broadcast. This is not limited in this application.

S602: The primary device sends resource configuration information of a third reference signal and resource configuration information of a fourth reference signal to at least one fifth device, and sends resource configuration information of the fourth reference signal to the target device, where the resource configuration information of the third reference signal indicates a resource used by the primary device to send the third reference signal to the at least one fifth device, the resource configuration information of the fourth reference signal indicates a resource used by the target device to send the fourth reference signal to the at least one fifth device, and the at least one fifth device includes a cooperation device.

Similar to the method 500, similarly, resource configuration of the fourth reference signal may be determined by the primary device, or may be determined by the target device. When the resource configuration is determined by the primary device, in S602, the primary device separately sends the resource configuration information of the fourth reference signal to the target device and the at least one fifth device. When the resource configuration is determined by the target device, in S602, the target device sends the resource configuration information of the fourth reference signal to the at least one fifth device. FIG. 5 shows the former case.

S603: The primary device sends the third reference signal to the at least one fifth device based on the resource configuration information of the third reference signal, and the at least one fifth device receives the third reference signal based on the resource configuration information of the third reference signal.

S604: The at least one fifth device determines first indication information based on the third reference signal, where the first indication information indicates positioning accuracy between the at least one fifth device and the primary device and/or indicates whether a first channel between the at least one fifth device and the primary device is a LoS propagation channel.

S605: The at least one fifth device sends the first indication information to the primary device.

S606: The target device sends the fourth reference signal to the at least one fifth device based on the resource configuration information of the fourth reference signal, and the at least one fifth device receives the fourth reference signal based on the resource configuration information of the fourth reference signal.

S607: The at least one fifth device determines second indication information based on the fourth reference signal, where the second indication information indicates positioning accuracy between the at least one fifth device and the target device and/or indicates whether a second channel between the at least one fifth device and the target device is a LoS propagation channel.

S608: The at least one fifth device sends the second indication information to the primary device.

S609: The primary device selects a cooperation device from the at least one fifth device based on the first indication information and the second indication information.

S610: The primary device sends cooperative positioning request acknowledgment information to the determined cooperation device.

S611: The cooperation device replies an ACK to the primary device, to indicate acknowledgment of performing a cooperative positioning service.

It should be understood that a specific execution method of S601 to S611 is similar to that of S501 to S51, and details are not described herein again.

It should be understood that a sequence of sending the third reference signal and the fourth reference signal is not limited in this application.

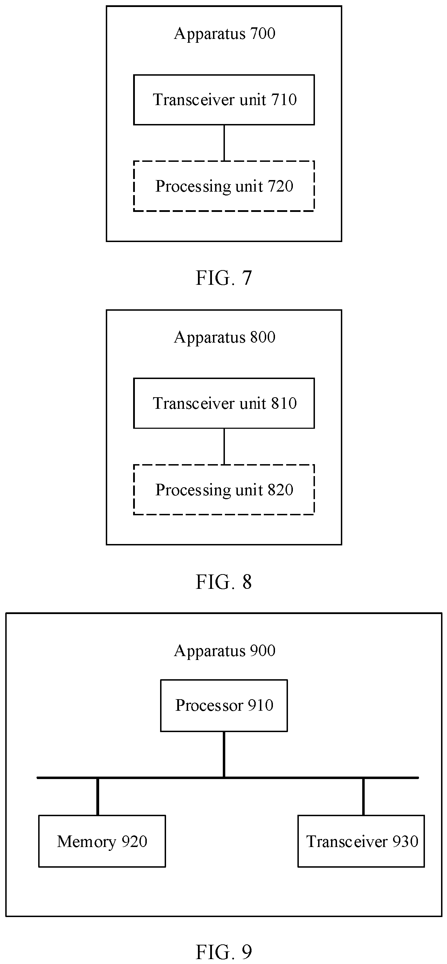

The foregoing describes in detail the technical solutions of the positioning methods provided in embodiments of this application with reference to FIG. 1 to FIG. 6. The following describes positioning apparatuses provided in embodiments of this application with reference to FIG. 7 to FIG. 9.

FIG. 7 is a schematic block diagram of a positioning apparatus according to an embodiment of this application. As shown in FIG. 7, the apparatus 700 includes a transceiver unit 710.

In a possible design, the apparatus 700 may correspond to the first device in the methods 200, 300, 400, 500, and 600 in embodiments of this application. The communication apparatus 700 may include units configured to perform methods performed by the first device in the methods 200, 300, 400, 500, and 600. In addition, the units in the communication apparatus 700 and the foregoing other operations and/or functions are respectively used to implementation corresponding procedures of the methods 200, 300, 400, 500, and 600.

For example, the transceiver unit 710 may be configured to separately send positioning request information to the second device and the third device, where the positioning request information is used to request the second device and the third device to initiate relative positioning.

The transceiver unit 710 is further configured to receive first measurement information from the second device and/or second measurement information from the third device, where the first measurement information is used to determine a relative location between the second device and the third device, the first measurement information includes a first measurement result and error distribution of the first measurement result, the second measurement information is used to determine the relative location between the second device and the third device, the second measurement information includes a second measurement result and error distribution of the second measurement result, and the first measurement information and/or the second measurement information are/is used to determine a result of the relative location between the second device and the third device.

Optionally, the apparatus may further include a processing unit 720. The processing unit 720 may be configured to determine a relative location between the second device and the fourth device based on at least one of the first measurement information, the second measurement information, third measurement information, fourth measurement information, fifth measurement information, or sixth measurement information.

It should be understood that a specific process in which the units perform the foregoing corresponding steps is described in detail in the foregoing method embodiments. For brevity, details are not described herein.

FIG. 8 is a schematic block diagram of a positioning apparatus according to an embodiment of this application. As shown in FIG. 8, the apparatus 800 includes a transceiver unit 810.

In a possible design, the apparatus 800 may correspond to the third device in the methods 200, 300, 400, 500, and 600 in embodiments of this application. The communication apparatus 800 may include units configured to perform methods performed by the first device in the methods 200, 300, 400, 500, and 600. In addition, the units in the communication apparatus 800 and the foregoing other operations and/or functions are respectively used to implementation corresponding procedures of the methods 200, 300, 400, 500, and 600.

For example, the transceiver unit 810 may be configured to receive positioning request information from the first device, where the positioning request information is used to request the third device to initiate relative positioning with a second device.

The transceiver unit 810 is further configured to send second measurement information to the first device, where the second measurement information indicates a relative location between the second device and the third device, and the second measurement information includes a second measurement result and error distribution of the second measurement result.

Optionally, the apparatus may further include a processing unit 820. The processing unit 820 may be configured to determine, based on resource configuration information of a first reference signal, a resource for receiving the first reference signal.

It should be understood that a specific process in which the units perform the foregoing corresponding steps is described in detail in the foregoing method embodiments. For brevity, details are not described herein.

FIG. 9 is a block diagram of a structure of a communication apparatus 900 according to an embodiment of this application. The communication apparatus 900 shown in FIG. 9 includes a processor 910, a memory 920, and a transceiver 930. The processor 910 is coupled to the memory 920, and is configured to execute instructions stored in the memory 920, to control the transceiver 930 to send a signal and/or receive a signal.

It should be understood that the processor 910 and the memory 920 may be integrated into one processing apparatus. The processor 910 is configured to execute program code stored in the memory 920 to implement the foregoing functions. During specific implementation, the memory 920 may alternatively be integrated into the processor 910, or may be independent of the processor 910. It should be understood that the processor 910 may alternatively correspond to each processing unit in the foregoing communication apparatus, and the transceiver 930 may correspond to each receiving unit and each sending unit in the foregoing communication apparatus.

It should be further understood that the transceiver 930 may include a receiver (or referred to as a receiver machine) and a transmitter (or referred to as a transmitter machine). The transceiver may further include an antenna. There may be one or more antennas. The transceiver further may alternatively be a communication interface or an interface circuit.

Specifically, the communication apparatus 900 may correspond to the first device in the methods 200, 300, 400, 500, and 600, the second device in the methods 200, 300, 400, 500, and 600, the third device in the methods 200, 300, 400, 500, and 600, or the fourth device in the methods 400 and 500 according to embodiments of this application. It should be understood that a specific process in which the units perform the foregoing corresponding steps is described in detail in the foregoing method embodiments. For brevity, details are not described herein.

When the communication apparatus 900 is a chip, the chip includes a transceiver unit and a processing unit. The transceiver unit may be an input/output circuit or a communication interface. The processing unit may be a processor integrated on the chip, a microprocessor, or an integrated circuit.

According to the methods provided in embodiments of this application, this application further provides a computer program product. The computer program product includes computer program code. When the computer program code is run on a computer, the computer is enabled to perform the method in any one of the embodiments of the method 200, the method 300, the method 400, the method 500, and the method 600.

According to the methods provided in embodiments of this application, this application further provides a computer-readable medium. The computer-readable medium includes program code. When the program code is run on a computer, the computer is enabled to perform the method in any one of the embodiments of the method 200, the method 300, the method 400, the method 500, and the method 600.

In embodiments of this application, the word "exemplary", "for example", or the like is used to represent giving an example, an illustration, or a description. Any embodiment or design solution described as an "example" in this application should not be explained as being more preferred or having more advantages than another embodiment or design solution. To be exact, use of the word "example" is intended to present a concept in a specific manner.

In embodiments of this application, "corresponding (corresponding, relevant)" and "corresponding (corresponding)" may be sometimes interchangeably used. It should be noted that, when a difference is not emphasized, meanings to be expressed are the same.

A network architecture and a service scenario described in embodiments of this application are intended to describe the technical solutions in embodiments of this application more clearly, and do not constitute any limitation on the technical solutions provided in embodiments of this application. Persons of ordinary skill in the art may know that, with evolution of the network architecture and emergence of a new service scenario, the technical solutions provided in embodiments of this application are also applicable to a similar technical problem.

Reference to "an embodiment", "some embodiments", or the like described in this specification indicates that one or more embodiments of this application include specific features, structures, or features described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

It should be understood that, terms "first", "second", and various sequence numbers in embodiments of this application are merely used for distinguishing for ease of description, for example, distinguishing between bandwidths under different conditions, but are not intended to limit the scope of embodiments of this application.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should further be noted that the memory described in this specification is intended to include but is not limited to these memories and any memory of another proper type.

Persons of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on an actual requirement to implement the solutions provided in this application.

In addition, functional units in embodiments of this application may be integrated into one processing unit, each of the units may exist alone physically, or two or more units may be integrated into one unit.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state disk, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A positioning method, wherein the method is performed by a first device and comprises:
separately sending positioning request information to a second device and a third device, wherein the positioning request information is used to request the second device and the third device to initiate relative positioning; and
receiving first measurement information from the second device and/or second measurement information from the third device, wherein the first measurement information is used to determine a relative location between the second device and the third device, the first measurement information comprises a first measurement result and error distribution of the first measurement result, the second measurement information is used to determine the relative location between the second device and the third device, the second measurement information comprises a second measurement result and error distribution of the second measurement result, and the first measurement information and/or the second measurement information are/is used to determine a result of the relative location between the second device and the third device.

2. The method according to claim 1, wherein the method further comprises:
sending resource configuration information of a first reference signal and/or resource configuration information of a second reference signal to the second device and the third device, wherein the resource configuration information of the first reference signal indicates a resource used by the second device to send the first reference signal to the third device, and the resource configuration information of the second reference signal indicates a resource used by the third device to send the second reference signal to the second device.

3. The method according to claim 1 or 2, wherein the receiving first measurement information from the second device and/or second measurement information from the third device comprises:
receiving the first measurement information from the second device or the second measurement information from the third device, wherein
the first measurement result comprises first time difference information, the second measurement result comprises second time difference information, the first time difference information indicates a time difference between a moment at which the third device sends the second reference signal and a moment at which the second device receives the second reference signal, and the second time difference information indicates a time difference between a moment at which the second device sends the first reference signal and a moment at which the third device receives the first reference signal.

4. The method according to claim 1 or 2, wherein the receiving first measurement information from the second device and/or second measurement information from the third device comprises:
receiving the first measurement information from the second device and the second measurement information from the third device, wherein
the first measurement result comprises third time difference information, the second measurement result comprises fourth time difference information, the third time difference information indicates a time difference between a moment at which the second device sends the first reference signal and a moment at which the second device receives the second reference signal, and the fourth time difference information indicates a time difference between a moment at which the third device receives the first reference signal and a moment at which the third device sends the second reference signal.

5. The method according to claim 3 or 4, wherein the first measurement result comprises first angle measurement information and/or the second measurement result comprises second angle measurement information, the first angle measurement information is determined based on the second reference signal, the first angle measurement information indicates an angle of the third device relative to the second device, the second angle measurement information is determined based on the first reference signal, and the second angle measurement information indicates an angle of the second device relative to the third device.

6. The method according to any one of claims 1 to 5, wherein the method further comprises:
receiving third measurement information from the third device and/or fourth measurement information from a fourth device, wherein the third measurement information is used to determine a relative location between the third device and the fourth device, the third measurement information comprises a third measurement result and error distribution of the third measurement result, the fourth measurement information is used to determine the relative location between the third device and the fourth device, and the fourth measurement information comprises a fourth measurement result and error distribution of the fourth measurement result.

7. The method according to claim 6, wherein the method further comprises:
sending resource configuration information of a seventh reference signal and/or resource configuration information of an eighth reference signal to the third device and the fourth device, wherein the resource configuration information of the seventh reference signal indicates a resource used by the third device to send the seventh reference signal to the fourth device, and the resource configuration information of the eighth reference signal indicates a resource used by the fourth device to send the eighth reference signal to the third device.

8. The method according to claim 6 or 7, wherein the receiving third measurement information from the third device and/or fourth measurement information from a fourth device comprises:
receiving the third measurement information from the third device or the fourth measurement information from the fourth device, wherein
the third measurement result comprises fifth time difference information, the fourth measurement result comprises sixth time difference information, the fifth time difference information indicates a time difference between a moment at which the fourth device sends the eighth reference signal and a moment at which the third device receives the eighth reference signal, and the sixth time difference information indicates a time difference between a moment at which the third device sends the seventh reference signal and a moment at which the fourth device receives the seventh reference signal.

9. The method according to claim 6 or 7, wherein the receiving third measurement information from the third device and/or fourth measurement information from a fourth device comprises:
receiving the third measurement information from the third device and the fourth measurement information from the fourth device, wherein
the third measurement result comprises seventh time difference information, the fourth measurement result comprises eighth time difference information, the seventh time difference information indicates a time difference between a moment at which the third device sends the seventh reference signal and a moment at which the third device receives the eighth reference signal, and the eighth time difference information indicates a time difference between a moment at which the fourth device receives the seventh reference signal and a moment at which the fourth device sends the eighth reference signal.

10. The method according to claim 8 or 9, wherein the third measurement result comprises third angle measurement information and/or the fourth measurement result comprises fourth angle measurement information, the third angle measurement information is determined based on the eighth reference signal, the third angle measurement information indicates an angle of the fourth device relative to the third device, the fourth angle measurement information is determined based on the seventh reference signal, and the fourth angle measurement information indicates an angle of the third device relative to the fourth device.

11. The method according to any one of claims 1 to 10, wherein the method further comprises:
receiving fifth measurement information from the second device and/or sixth measurement information from the fourth device, wherein the fifth measurement information is used to determine a relative location between the second device and the fourth device, the fifth measurement information comprises a fifth measurement result and error distribution of the fifth measurement result, the sixth measurement information is used to determine the relative location between the second device and the fourth device, and the sixth measurement information comprises a sixth measurement result and error distribution of the sixth measurement result.

12. The method according to claim 11, wherein the method further comprises:
sending resource configuration information of a ninth reference signal and/or resource configuration information of a tenth reference signal to the second device and the fourth device, wherein the resource configuration information of the ninth reference signal indicates a resource used by the second device to send the ninth reference signal to the fourth device, and the resource configuration information of the tenth reference signal indicates a resource used by the fourth device to send the tenth reference signal to the second device.

13. The method according to claim 11 or 12, wherein the receiving fifth measurement information from the second device and/or sixth measurement information from the fourth device comprises:
receiving the fifth measurement information from the second device or the sixth measurement information from the fourth device, wherein
the fifth measurement result comprises ninth time difference information, the sixth measurement result comprises tenth time difference information, the ninth time difference information indicates a time difference between a moment at which the fourth device sends the tenth reference signal and a moment at which the second device receives the tenth reference signal, and the tenth time difference information indicates a time difference between a moment at which the second device sends the ninth reference signal and a moment at which the fourth device receives the ninth reference signal.

14. The method according to claim 11 or 12, wherein the receiving fifth measurement information from the second device and/or sixth measurement information from the fourth device comprises:
receiving the fifth measurement information from the second device and the sixth measurement information from the fourth device, wherein
the fifth measurement result comprises eleventh time difference information, the sixth measurement result comprises twelfth time difference information, the eleventh time difference information indicates a time difference between a moment at which the second device sends the ninth reference signal and a moment at which the second device receives the tenth reference signal, and the twelfth time difference information indicates a time difference between a moment at which the fourth device receives the ninth reference signal and a moment at which the fourth device sends the tenth reference signal.

15. The method according to claim 13 or 14, wherein the fifth measurement result comprises fifth angle measurement information and/or the sixth measurement result comprises sixth angle measurement information, the fifth angle measurement information is determined based on the tenth reference signal, the fifth angle measurement information indicates an angle of the fourth device relative to the second device, the sixth angle measurement information is determined based on the ninth reference signal, and the sixth angle measurement information indicates an angle of the second device relative to the fourth device.

16. The method according to any one of claims 11 to 15, wherein the method further comprises:
determining the relative location between the second device and the fourth device based on at least one of the first measurement information, the second measurement information, the third measurement information, the fourth measurement information, the fifth measurement information, or the sixth measurement information.

17. The method according to any one of claims 1 to 16, wherein the method further comprises:
receiving at least one of first prior distribution information, second prior distribution information, or third prior distribution information, wherein the first prior distribution information is from the second device, the second prior distribution information is from the third device, and the third prior distribution information is from the second device or the third device; and
the first prior distribution information indicates prior distribution of the relative location between the second device and the fourth device, the second prior distribution information indicates prior distribution of the relative location between the third device and the fourth device, and the third prior distribution information indicates prior distribution of the relative location between the second device and the third device.

18. The method according to any one of claims 1 to 17, wherein the method further comprises:
receiving first indication information and second indication information that are from at least one fifth device, wherein the first indication information indicates positioning accuracy between the at least one fifth device and the fourth device and/or indicates whether a first channel between the at least one fifth device and the fourth device is a line-of-sight LoS propagation channel, the second indication information indicates positioning accuracy between the at least one fifth device and the second device and/or indicates whether a second channel between the at least one fifth device and the second device is a LoS propagation channel, and the at least one fifth device comprises the third device.

19. The method according to claim 18, wherein the first indication information is determined based on a measurement result of a third reference signal, the second indication information is determined based on a measurement result of a fourth reference signal, and the method further comprises:
sending resource configuration information of the third reference signal to the fourth device and the at least one fifth device, wherein the resource configuration information of the third reference signal indicates a resource used by the fourth device to send the third reference signal to the at least one fifth device; and
sending resource configuration information of the fourth reference signal to the second device and the at least one fifth device, wherein the resource configuration information of the fourth reference signal indicates a resource used by the second device to send the fourth reference signal to the at least one fifth device.

20. The method according to claim 18, wherein the first indication information is determined based on a measurement result of a third reference signal, the second indication information is determined based on a measurement result of a fourth reference signal, the fourth device and the first device are a same device, and the method further comprises:
sending resource configuration information of the third reference signal to the at least one fifth device, wherein the resource configuration information of the third reference signal indicates a resource used by the first device to send the third reference signal to the at least one fifth device; and
sending resource configuration information of the fourth reference signal to the second device and the at least one fifth device, wherein the resource configuration information of the fourth reference signal indicates a resource used by the second device to send the fourth reference signal to the at least one fifth device.

21. The method according to claim 18 or 19, wherein the method further comprises:
selecting the third device from the at least one fifth device based on the first indication information and/or the second indication information.

22. The method according to any one of claims 1 to 20, wherein the error distribution comprises a mean and a variance/a covariance matrix of errors, or the error distribution comprises a sampling point and a weight of an error.

23. The method according to any one of claims 17 to 21, wherein the prior distribution is a mean and a covariance matrix/variance of errors of two-dimensional location coordinates or three-dimensional location coordinates, or the prior distribution is a sampling point and a weight of an error of two-dimensional location coordinates or three-dimensional location coordinates.

24. A positioning method, wherein the method is performed by a third device and comprises:
receiving positioning request information from a first device, wherein the positioning request information is used to request the third device to initiate relative positioning with a second device; and
sending second measurement information to the first device, wherein the second measurement information indicates a relative location between the second device and the third device, and the second measurement information comprises a second measurement result and error distribution of the second measurement result.

25. The method according to claim 24, wherein the method further comprises:
receiving resource configuration information of a first reference signal and/or resource configuration information of a second reference signal that are/is from the first device, wherein the resource configuration information of the first reference signal indicates a resource used by the second device to send the first reference signal to the third device, and the resource configuration information of the second reference signal indicates a resource used by the third device to send the second reference signal to the second device.

26. The method according to claim 25, wherein the receiving resource configuration information of a first reference signal and/or resource configuration information of a second reference signal that are/is from the first device comprises:
receiving the resource configuration information of the first reference signal that is from the first device; and
the method further comprises:
receiving the first reference signal based on the resource configuration information of the first reference signal.

27. The method according to claim 25 or 26, wherein the second measurement result comprises second time difference information, and the second time difference information indicates a time difference between a moment at which the second device sends the first reference signal and a moment at which the third device receives the first reference signal.

28. The method according to claim 25, wherein the receiving resource configuration information of a first reference signal and/or resource configuration information of a second reference signal that are/is from the first device comprises:
receiving the resource configuration information of the first reference signal and the resource configuration information of the second reference signal that are from the first device; and
the method further comprises:
receiving the first reference signal based on the resource configuration information of the first reference signal; and
sending the second reference signal based on the resource configuration information of the second reference signal.

29. The method according to claim 25 or 28, wherein the second measurement result comprises fourth time difference information, and the fourth time difference information indicates a time difference between a moment at which the third device receives the first reference signal and a moment at which the third device sends the second reference signal.

30. The method according to claim 27 or 29, wherein the second measurement result comprises second angle measurement information, the second angle measurement information is determined based on the first reference signal, and the second angle measurement information indicates an angle of the second device relative to the third device.

31. The method according to any one of claims 24 to 30, wherein the method further comprises:
sending third measurement information to the first device, wherein the third measurement information indicates a relative location between the third device and a fourth device, and the third measurement information comprises a third measurement result and error distribution of the third measurement result.

32. The method according to claim 31, wherein the method further comprises:
receiving resource configuration information of a seventh reference signal and/or resource configuration information of an eighth reference signal that are/is from the first device, wherein the resource configuration information of the seventh reference signal indicates a resource used by the third device to send the seventh reference signal to the fourth device, and the resource configuration information of the eighth reference signal indicates a resource used by the fourth device to send the eighth reference signal to the third device.

33. The method according to claim 32, wherein the receiving resource configuration information of a seventh reference signal and/or resource configuration information of an eighth reference signal that are/is from the first device comprises:
receiving the resource configuration information of the eighth reference signal that is from the first device; and
the method further comprises:
receiving the eighth reference signal based on the resource configuration information of the eighth reference signal.

34. The method according to claim 32 or 33, wherein the third measurement result comprises fifth time difference information, and the fifth time difference information indicates a time difference between a moment at which the fourth device sends the eighth reference signal and a moment at which the third device receives the eighth reference signal.

35. The method according to claim 32, wherein the receiving resource configuration information of a seventh reference signal and/or resource configuration information of an eighth reference signal that are/is from the first device comprises:
receiving the resource configuration information of the seventh reference signal and the resource configuration information of the eighth reference signal that are from the first device; and
the method further comprises:
sending the seventh reference signal based on the resource configuration information of the seventh reference signal; and
receiving the eighth reference signal based on the resource configuration information of the eighth reference signal.

36. The method according to claim 32 or 35, wherein the third measurement result comprises seventh time difference information, and the seventh time difference information indicates a time difference between a moment at which the third device sends the seventh reference signal and a moment at which the third device receives the eighth reference signal.

37. The method according to claim 24 or 36, wherein the third measurement result comprises third angle measurement information, the third angle measurement information is determined based on the eighth reference signal, and the third angle measurement information indicates an angle of the fourth device relative to the third device.

38. The method according to any one of claims 24 to 37, wherein the method further comprises:
sending at least one of second prior distribution information or third prior distribution information to the first device, wherein the second prior distribution information indicates prior distribution of the relative location between the third device and the fourth device, and the third prior distribution information indicates prior distribution of the relative location between the second device and the third device.

39. The method according to any one of claims 24 to 38, wherein the method further comprises:
sending first indication information and second indication information to the first device, wherein the first indication information indicates positioning accuracy between the third device and the fourth device and/or indicates whether a first channel between the third device and the fourth device is a line-of-sight LoS propagation channel, and the second indication information indicates positioning accuracy between the third device and the second device and/or indicates whether a second channel between the third device and the second device is a LoS propagation channel.

40. The method according to claim 39, wherein the method further comprises:
receiving resource configuration information of a third reference signal and resource configuration information of a fourth reference signal that are from the first device, wherein the resource configuration information of the third reference signal indicates a resource used by the fourth device to send the third reference signal to the third device, and the resource configuration information of the fourth reference signal indicates a resource used by the second device to send the fourth reference signal to the third device; and
the first indication information is determined based on a measurement result of the third reference signal, and the second indication information is determined based on a measurement result of the fourth reference signal.

41. The method according to any one of claims 24 to 40, wherein the error distribution is a mean and a covariance matrix/variance of errors, or the error distribution is a sampling point and a weight of an error.

42. The method according to any one of claims 38 to 41, wherein the prior distribution is a mean and a covariance matrix/variance of errors of two-dimensional location coordinates or three-dimensional location coordinates, or the prior distribution is a sampling point and a weight of an error of two-dimensional location coordinates or three-dimensional location coordinates.

43. A positioning apparatus, comprising units configured to perform steps of the method according to any one of claims 1 to 42.

44. A positioning apparatus, comprising:
a memory, configured to store computer instructions; and
a processor, configured to execute the computer instructions stored in the memory, to enable the apparatus to perform the method according to any one of claims 1 to 42.

45. A computer-readable storage medium, wherein the computer-readable storage medium stores a computer program, and the computer program is used to perform the method according to any one of claims 1 to 42.

46. A chip system, comprising a processor, wherein the processor is configured to execute a stored computer program, and the computer program is used to perform the method according to any one of claims 1 to 42.
